(19) Europäisches Patentamt / European Patent Office / Office européen des brevets

(11) **EP 3 929 068 B1**

## (12) EUROPEAN PATENT SPECIFICATION

(45) Date of publication and mention
of the grant of the patent:
**15.05.2024   Bulletin 2024/20**

(21) Application number: **19915907.0**

(22) Date of filing: **24.12.2019**

(51) International Patent Classification (IPC):
**B62D 101/00** (2006.01)     **B62D 113/00** (2006.01)
**B62D 119/00** (2006.01)     **B62D 121/00** (2006.01)
**B62D 6/00** (2006.01)         **B62D 5/04** (2006.01)

(52) Cooperative Patent Classification (CPC):
**B62D 6/008; B62D 6/003;** B62D 5/0463

(86) International application number:
**PCT/JP2019/050657**

(87) International publication number:
**WO 2020/170602 (27.08.2020 Gazette 2020/35)**

(54) **VEHICLE STEERING DEVICE**

FAHRZEUGLENKVORRICHTUNG

DISPOSITIF DE DIRECTION DE VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **19.02.2019   JP 2019027806**

(43) Date of publication of application:
**29.12.2021   Bulletin 2021/52**

(73) Proprietor: **NSK Ltd.**
**Tokyo 141-8560 (JP)**

(72) Inventor: **MORI, Kenji**
**Fujisawa-shi, Kanagawa 251-8501 (JP)**

(74) Representative: **SSM Sandmair**
**Patentanwälte Rechtsanwalt**
**Partnerschaft mbB**
**Joseph-Wild-Straße 20**
**81829 München (DE)**

(56) References cited:
**EP-A1- 1 800 992       JP-A- H1 149 000**
**JP-A- 2002 160 653     JP-A- 2006 281 880**
**JP-A- 2007 314 005     JP-A- 2011 079 395**

EP 3 929 068 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field

The present invention relates to a vehicle steering device.

Background

An electric power steering device (EPS) as a vehicle steering device applies assist force (steering supplementary force) to a steering system of the vehicle through rotational force of a motor. The EPS applies, as the assist force, drive power of the motor, which is controlled by electrical power supplied from an inverter, to a steering shaft or a rack shaft through a transmission mechanism including a deceleration mechanism.

For example, a vehicle steering device configured to increase stability of a vehicle by avoiding oversteer and understeer in traveling on a low-u road has been disclosed (for example, Patent Literature 1).

EP 1 800 992 A1 discloses A motor-driven power steering apparatus is provided with a self-aligning torque computing means for computing a self-aligning torque based on of a steering angle and a vehicle speed, a friction torque computing means for computing a friction torque in accordance with a steering angle change from a steering angular velocity, an apparent steering torque computing means for computing an apparent steering torque from the friction torque and a steering torque, and a steering torque feedback control means for driving and controlling an assist motor in such a manner that a difference between the self-aligning torque and the apparent steering torque becomes 0.

Citation List

Patent Literature

Patent Literature 1: Japanese Patent Application Laid-open No. 2006-315634

Summary

Technical Problem

When road surface friction resistance significantly decreases due to, for example, a frozen road or a hydroplaning phenomenon in a puddle, a tire slips and the real self-aligning torque of the tire decreases. Meanwhile, with a configuration in which target steering torque is controlled to follow real steering torque so that influence of the state of a road surface can be avoided when the target steering torque is generated, the target steering torque and the real self-aligning torque of the tire deviate from each other, and thus a driver is late to notice loss of the grip force of the tire, and an emergency avoidance operation potentially delays.

The present invention is made in view of the above-described problem and is intended to provide a vehicle steering device capable of feeding loss of the grip force of a tire back to a driver.

Solution to Problem

The invention is defined by the subject-matter of claim 1. The dependent claims relate to preferred embodiments of the description. To achieve the above object, a vehicle steering device according to an aspect of the present invention configured to assist and control a steering system of a vehicle by driving and controlling a motor configured to assist steering force, the vehicle steering device comprising a target steering torque generation unit configured to generate target steering torque of the motor, wherein the target steering torque generation unit generates target steering torque in accordance with the difference value of a torque signal in accordance with a steering angle and a vehicle speed from a value obtained by multiplying a physical quantity generated through tire slipping by a predetermined proportionality coefficient.

With the above-described configuration, steering torque in accordance with vehicle behavior change caused by tire slipping is provided. Accordingly, a driver can know loss of tire grip force.

As a desirable aspect of the vehicle steering device, it is preferable that the target steering torque generation unit generates the target steering torque by multiplying the torque signal by a torque adjustment coefficient value in accordance with the difference value.

Accordingly, loss of tire grip force can be fed back to the driver with a small calculation amount.

As a desirable aspect of the vehicle steering device, it is preferable that the target steering torque generation unit reduces the torque adjustment coefficient value as the difference value is larger.

Accordingly, the amount of correction of the torque signal in accordance with the steering angle and the vehicle speed can be increased as deviation of the torque signal from vehicle behavior increases.

As a desirable aspect of the vehicle steering device, it is preferable that the torque adjustment coefficient value be a positive value equal to or smaller than one.

Accordingly, the target steering torque can be appropriately set.

As a desirable aspect of the vehicle steering device, it is preferable that the target steering torque generation unit generates the target steering torque by subtracting, from the torque signal, a torque adjustment subtraction value in accordance with the difference value.

Accordingly, loss of tire grip force can be fed back to the driver with a small calculation amount.

As a desirable aspect of the vehicle steering device, it is preferable that the target steering torque generation unit increases the torque adjustment subtraction value as the difference value is larger.

Accordingly, the amount of correction of the torque signal in accordance with the steering angle and the vehicle speed can be increased as deviation of the torque signal from vehicle behavior increases.

As a desirable aspect of the vehicle steering device, it is preferable that the torque adjustment subtraction value is smaller than the torque signal.

Accordingly, the target steering torque can be appropriately set.

As a desirable aspect of the vehicle steering device, it is preferable that the physical quantity is self-aligning torque.

Accordingly, it is possible to perform control by using, as a parameter, the self-aligning torque that is the physical quantity generated through tire slipping.

As a desirable aspect of the vehicle steering device, it is preferable that the physical quantity is a yaw rate.

Accordingly, it is possible to perform control by using, as a parameter, the yaw rate that is the physical quantity generated through tire slipping.

As a desirable aspect of the vehicle steering device, it is preferable that the physical quantity is a current command value of the motor.

Accordingly, it is possible to perform control by using, as a parameter, the current command value of the motor that is the physical quantity generated through tire slipping.

Advantageous Effects of Invention

According to the present invention, it is possible to provide a vehicle steering device capable of feeding loss of tire grip force back to a driver.

Brief Description of Drawings

FIG. 1 is a diagram illustrating a typical configuration of an electric power steering device.
FIG. 2 is a schematic diagram illustrating a hardware configuration of a control unit configured to control the electric power steering device.
FIG. 3 is a diagram illustrating an exemplary internal block configuration of the control unit in the electric power steering device.
FIG. 4 is a structural diagram illustrating exemplary installation of a rudder angle sensor.
FIG. 5 is a diagram illustrating an exemplary internal block configuration of a control unit according to a first embodiment.
FIG. 6 is an explanatory diagram of a steering direction.
FIG. 7 is a flowchart illustrating exemplary operation of the control unit according to the first embodiment.
FIG. 8 is a block diagram illustrating an exemplary configuration of a target steering torque generation unit of the first embodiment.
FIG. 9 is a diagram illustrating exemplary characteristics of a basic map held by a basic map unit.
FIG. 10 is a diagram illustrating exemplary characteristics of a damper gain map held by a damper gain map unit.
FIG. 11 is a diagram illustrating exemplary characteristics of a hysteresis correction unit.
FIG. 12 is a block diagram illustrating an exemplary configuration of a low-μ road torque correction value calculation unit of the first embodiment.
FIG. 13 is a diagram illustrating change of real self-aligning torque on a low-μ road.
FIG. 14 is a diagram illustrating exemplary characteristics of a torque adjustment coefficient value map held by a torque adjustment coefficient value map unit of the first embodiment.
FIG. 15 is a diagram illustrating an exemplary effect of a torque adjustment coefficient value output from the low-μ

road torque correction value calculation unit.

FIG. 16 is a block diagram illustrating an exemplary configuration of a twist angle control unit of the first embodiment.

FIG. 17 is a block diagram illustrating an exemplary configuration of a target steering torque generation unit of a first modification of the first embodiment.

FIG. 18 is a block diagram illustrating an exemplary configuration of a low-$\mu$ road torque correction value calculation unit of the first modification of the first embodiment.

FIG. 19 is a diagram illustrating exemplary characteristics of a torque adjustment subtraction value map held by a torque adjustment subtraction value map unit of the first modification of the first embodiment.

FIG. 20 is a diagram illustrating an exemplary internal block configuration of a control unit according to a second modification of the first embodiment.

FIG. 21 is a block diagram illustrating an exemplary configuration of a target steering torque generation unit of the second modification of the first embodiment.

FIG. 22 is a block diagram illustrating an exemplary configuration of a low-$\mu$ road torque correction value calculation unit of the second modification of the first embodiment.

FIG. 23 is a block diagram illustrating an exemplary configuration of a target steering torque generation unit of a third modification of the first embodiment.

FIG. 24 is a block diagram illustrating an exemplary configuration of a low-$\mu$ road torque correction value calculation unit of the third modification of the first embodiment.

FIG. 25 is a diagram illustrating an exemplary internal block configuration of a control unit according to a second embodiment.

FIG. 26 is a block diagram illustrating an exemplary configuration of a target steering torque generation unit of the second embodiment.

FIG. 27 is a block diagram illustrating an exemplary configuration of an SAT information correction unit.

FIG. 28 is a schematic diagram illustrating the status of torque generated between a road surface and steering.

FIG. 29 is a diagram illustrating exemplary characteristics of a steering torque sensitive gain.

FIG. 30 is a diagram illustrating exemplary characteristics of a vehicle speed sensitive gain.

FIG. 31 is a diagram illustrating exemplary characteristics of a rudder angle sensitive gain.

FIG. 32 is a diagram illustrating exemplary setting of the upper and lower limit values of a torque signal at a restriction unit.

FIG. 33 is a block diagram illustrating an exemplary configuration of a twist angle control unit of the second embodiment.

FIG. 34 is a block diagram illustrating an exemplary configuration of a target steering torque generation unit of a modification of the second embodiment.

FIG. 35 is a diagram illustrating an exemplary configuration of an SBW system in a manner corresponding to the typical configuration of the electric power steering device illustrated in FIG. 1.

FIG. 36 is a block diagram illustrating the configuration of a third embodiment.

FIG. 37 is a diagram illustrating an exemplary configuration of a target turning angle generation unit.

FIG. 38 is a diagram illustrating an exemplary configuration of a turning angle control unit.

FIG. 39 is a flowchart illustrating exemplary operation of the third embodiment.

FIG. 40 is a block diagram illustrating an exemplary configuration of a low-$\mu$ road torque correction value calculation unit of the third embodiment.

FIG. 41 is a block diagram illustrating an exemplary configuration of a low-$\mu$ road torque correction value calculation unit of a modification of the third embodiment.

Description of Embodiments

Modes for carrying out the invention (hereinafter referred to as embodiments) will be described below in detail with reference to the accompanying drawings. Note that, the present invention is not limited by the following embodiments. In addition, components in the embodiments described below include their equivalents such as those that could be easily thought of by the skilled person in the art and those identical in effect. Moreover, components disclosed in the embodiments described below may be combined as appropriate.

(First embodiment)

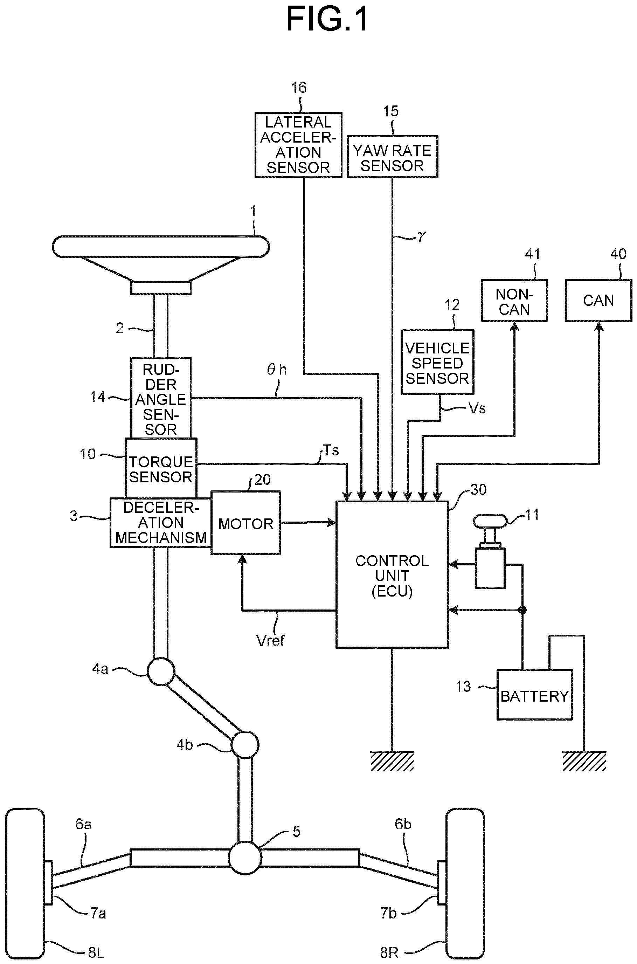

FIG. 1 is a diagram illustrating a typical configuration of an electric power steering device. The electric power steering device (EPS) as a vehicle steering device is coupled with steered wheels 8L and 8R through a column shaft (steering shaft or wheel shaft) 2 of a wheel 1, a deceleration mechanism 3, universal joints 4a and 4b, a pinion rack mechanism 5, and tie rods 6a and 6b and further through hub units 7a and 7b in an order in which force provided by a steering person transfers. In addition, a torque sensor 10 configured to detect steering torque Ts of the wheel 1 and a rudder angle sensor 14 configured to detect a steering angle θh are provided to the column shaft 2 including a torsion bar, and a motor 20 configured to assist steering force of the wheel 1 is coupled with the column shaft 2 through the deceleration mechanism 3.

Electrical power is supplied from a battery 13 to a control unit (ECU) 30 configured to control the electric power steering device, and an ignition key signal is input to the control unit 30 through an ignition key 11. The control unit 30 performs calculation of a current command value of an assist (steering auxiliary) command based on the steering torque Ts detected by the torque sensor 10 and vehicle speed Vs detected by a vehicle speed sensor 12, and controls current supplied to the motor 20 through a voltage control command value Vref obtained by providing compensation or the like to the current command value.

The control unit 30 is connected with an on-board network such as a controller area network (CAN) 40 through which various kinds of information of a vehicle are transmitted and received. In addition, the control unit 30 is connectable with a non-CAN 41 configured to transmit and receive communication other than the CAN 40, analog and digital signals, radio wave, and the like.

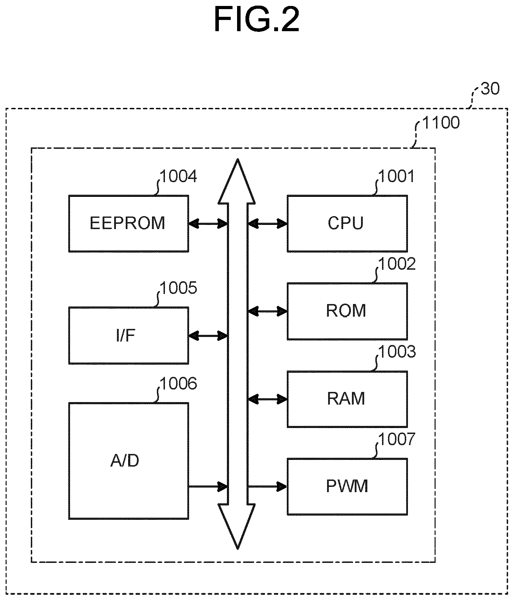

The control unit 30 is mainly configured as a CPU (including an MCU and an MPU). FIG. 2 is a schematic diagram illustrating a hardware configuration of the control unit configured to control the electric power steering device.

A control computer 1100 configured as the control unit 30 includes a central processing unit (CPU) 1001, a read only memory (ROM) 1002, a random access memory (RAM) 1003, an electrically erasable programmable rom (EEPROM) 1004, an interface (I/F) 1005, an analog/digital (A/D) converter 1006, and a pulse width modulation (PWM) controller 1007, and these components are connected with a bus.

The CPU 1001 is a processing device configured to execute a computer program for control (hereinafter referred to as a control program) of the electric power steering device and control the electric power steering device.

The ROM 1002 stores a control program for controlling the electric power steering device. In addition, the RAM 1003 is used as a work memory for operating the control program. The EEPROM 1004 stores, for example, control data input to and output from the control program. The control data is used on the control program loaded onto the RAM 1003 after the control unit 30 is powered on, and is overwritten to the EEPROM 1004 at a predetermined timing.

The ROM 1002, the RAM 1003, the EEPROM 1004, and the like are storage devices configured to store information and are storage devices (primary storage devices) directly accessible from the CPU 1001.

The A/D converter 1006 receives, for example, signals of the steering torque Ts, a detected current value Im of the motor 20, and the steering angle θh and converts the signals into digital signals.

The interface 1005 is connected with the CAN 40. The interface 1005 receives a signal (vehicle speed pulse) of a vehicle speed V from the vehicle speed sensor 12.

The PWM controller 1007 outputs a PWM control signal of each UVW phase based on a current command value to the motor 20.

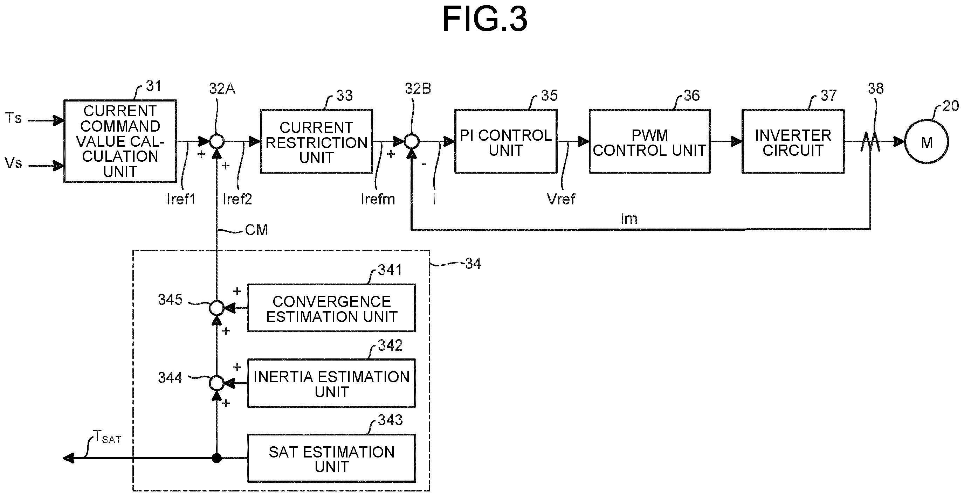

FIG. 3 is a diagram illustrating an exemplary internal block configuration of a control unit in an electric power steering device. The steering torque Ts and the vehicle speed Vs are input to a current command value calculation unit 31. The current command value calculation unit 31 refers to, based on the steering torque Ts and the vehicle speed Vs, a look-up table (such as an assist map) stored in advance and calculates a current command value Iref1 that is a control target value of current supplied to the motor 20.

A compensation signal generation unit 34 generates a compensation signal CM. The compensation signal generation unit 34 includes a convergence estimation unit 341, an inertia estimation unit 342, and a self-aligning torque (SAT) estimation unit 343. The convergence estimation unit 341 estimates the yaw rate of the vehicle based on the angular velocity of the motor 20, and estimates a compensation value with which shake operation of the wheel 1 is reduced to improve convergence of the yaw of the vehicle. The inertia estimation unit 342 estimates the inertial force of the motor 20 based on the angular acceleration of the motor 20, and estimates a compensation value with which the inertial force of the motor 20 is compensated to increase response. The SAT estimation unit 343 estimates self-aligning torque $T_{SAT}$ based on the steering torque Ts, assist torque, and the angular velocity and angular acceleration of the motor 20, and estimates a compensation value with which the assist torque is compensated with the self-aligning torque as reaction force. The compensation signal generation unit 34 may include an estimation unit configured to estimate another compensation value in addition to the convergence estimation unit 341, the inertia estimation unit 342, and the SAT estimation unit 343. The compensation signal CM is a sum obtained by adding, at an addition unit 345, the compensation value of the convergence estimation unit 341 and a sum obtained by adding the compensation value of the inertia estimation unit 342 and the compensation value of the SAT estimation unit 343 at an addition unit 344. Note that, in the present disclosure, the self-aligning torque $T_{SAT}$ estimated by the SAT estimation unit 343 is also output to a target steering torque generation unit 200 to be described later.

At an addition unit 32A, the compensation signal CM from the compensation signal generation unit 34 is added to the current command value Iref1, and characteristic compensation of a steering system is provided to the current command value Iref1 through the addition of the compensation signal CM to improve convergence, an inertia characteristic, and the like. Then, the current command value Iref1 becomes a current command value Iref2 provided with characteristic compensation through the addition unit 32A, and the current command value Iref2 is input to a current restriction unit 33. At the current restriction unit 33, largest current of the current command value Iref2 is restricted, and a current command value Irefm is generated. The current command value Irefm is input to a subtraction unit 32B, and a deviation I (Irefm - Im) from the detected current value Im fed back from the motor 20 side is calculated at the subtraction unit 32B. The deviation I is input to a PI control unit 35 for characteristic improvement of steering operation. Accordingly, the voltage control command value Vref, characteristics of which are improved at the PI control unit 35 is input to a PWM control unit 36, and in addition, the motor 20 is PWM-driven through an inverter circuit 37 as a motor drive unit. The detected current value Im of the motor 20 is detected by a current detector 38 and fed back to the subtraction unit 32B. In addition, the inverter circuit 37 includes a field effect transistor (hereinafter referred to as a FET) as a drive element and is configured as a bridge circuit of the FET.

In assist control by the conventional electric power steering device, steering torque manually applied by a driver is detected by a torque sensor as twist torque of the torsion bar, and motor current is controlled as assist current mainly in accordance with the torque. However, when control is performed by this method, the steering torque changes depending on the steering angle because of difference in the state (for example, tilt) of a road surface in some cases. The steering torque is also affected by variation of a motor output characteristic due to long-term use in some cases.

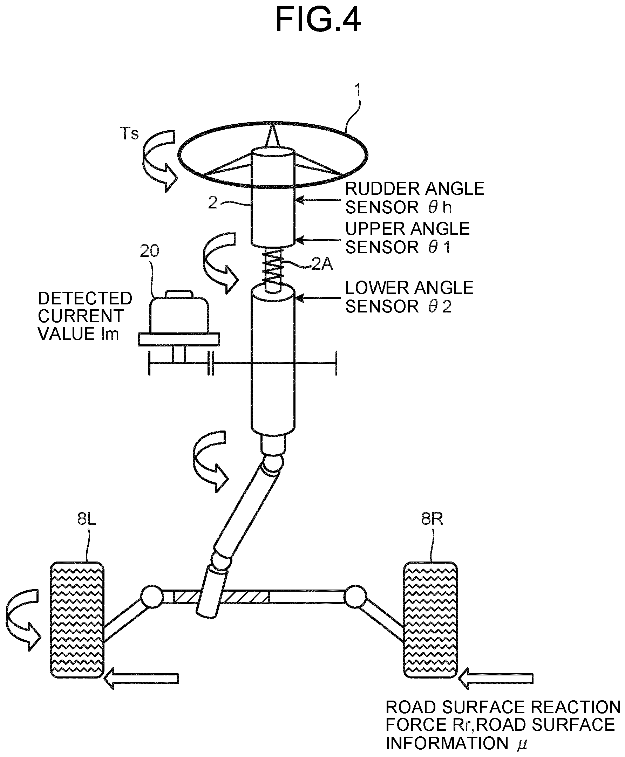

FIG. 4 is a structural diagram illustrating exemplary installation of the rudder angle sensor.

The column shaft 2 includes a torsion bar 2A. Road surface reaction force Rr and road surface information (road surface friction resistance $\mu$) act on the steered wheels 8L and 8R. An upper angle sensor is provided on the wheel side of the column shaft 2 with respect to the torsion bar 2A. A lower angle sensor is provided on the steering wheel side of the column shaft 2 with respect to the torsion bar 2A. The upper angle sensor detects a wheel angle $\theta_1$, and the lower angle sensor detects a column angle $\theta_2$. The steering angle $\theta h$ is detected by a rudder angle sensor provided at an upper part of the column shaft 2. The twist angle $\Delta\theta$ of the torsion bar is expressed in Expression (1) below based on the deviation between the wheel angle $\theta_1$ and the column angle $\theta_2$. In addition, torsion bar torque Tt is expressed in Expression (2) below by using the twist angle $\Delta\theta$ of the torsion bar expressed in Expression (1). Note that, Kt represents the spring constant of the torsion bar 2A.

$$\Delta\theta = \theta_2 - \theta_1 \tag{1}$$

$$Tt = -Kt \times \Delta\theta \tag{2}$$

The torsion bar torque Tt may be detected by using a torque sensor. In the present embodiment, the torsion bar torque Tt is treated as the steering torque Ts.

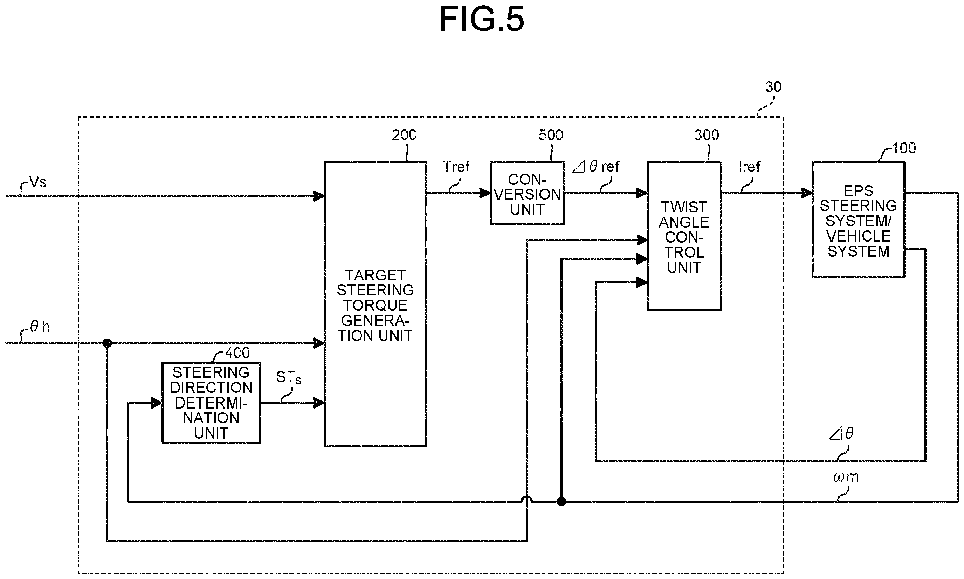

FIG. 5 is a diagram illustrating an exemplary internal block configuration of the control unit according to a first embodiment.

The control unit 30 includes, as internal block components, a target steering torque generation unit 200, a twist angle control unit 300, a steering direction determination unit 400, and a conversion unit 500.

In the present embodiment, wheel steering by the driver is assisted and controlled by the motor 20 of an EPS steering system/vehicle system 100. The EPS steering system/vehicle system 100 includes an angle sensor and an angular velocity calculation unit in addition to the motor 20.

The target steering torque generation unit 200 generates a target steering torque Tref that is a target value of the steering torque when the steering system of the vehicle is assisted and controlled in the present disclosure. The conversion unit 500 converts the target steering torque Tref into a target twist angle $\Delta\theta$ref. The twist angle control unit 300 generates a motor current command value Iref that is a control target value of current supplied to the motor 20.

The twist angle control unit 300 calculates the motor current command value Iref with which the twist angle $\Delta\theta$ is equal to the target twist angle $\Delta\theta$ref. The motor 20 is driven by the motor current command value Iref.

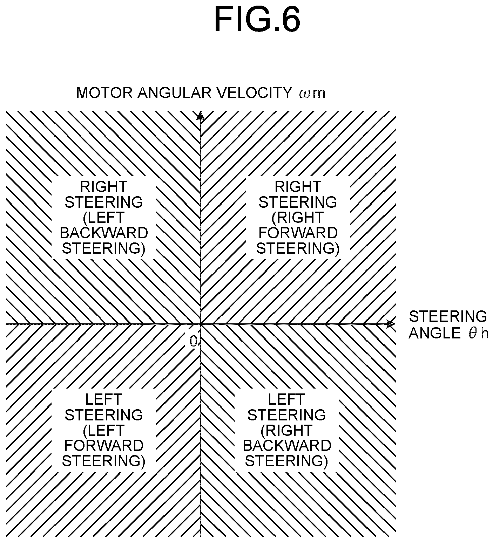

The steering direction determination unit 400 determines whether the steering direction is right or left based on a motor angular velocity $\omega m$ output from the EPS steering system/vehicle system 100, and outputs a result of the determination as a steering state signal STs. FIG. 6 is an explanatory diagram of the steering direction.

A steering state indicating whether the steering direction is right or left can be obtained as, for example, the relation between the steering angle $\theta h$ and the motor angular velocity $\omega m$ as illustrated in FIG. 6. Specifically, the steering direction is determined to be "right" when the motor angular velocity $\omega m$ is a positive value, or the steering direction is determined to be "left" when the motor angular velocity $\omega m$ is a negative value. Note that, an angular velocity calculated by performing speed calculation on the steering angle $\theta h$, the wheel angle $\theta_1$, or the column angle $\theta_2$ may be used in place of the motor angular velocity $\omega m$.

The conversion unit 500 converts the target steering torque Tref generated at the target steering torque generation unit 200 into the target twist angle Δθref by using the relation of Expression (2) above.

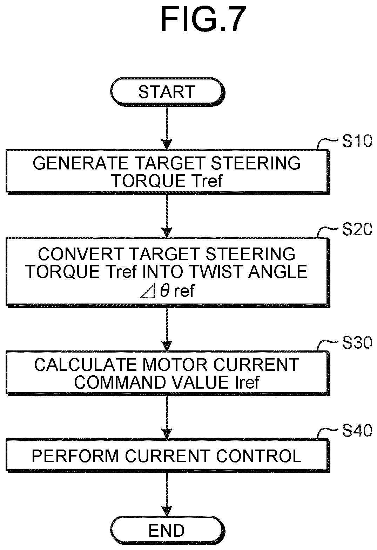

Subsequently, exemplary basic operation at the control unit of the first embodiment will be described below. FIG. 7 is a flowchart illustrating exemplary operation of the control unit according to the first embodiment.

The steering direction determination unit 400 determines whether the steering direction is right or left based on the sign of the motor angular velocity ωm output from the EPS steering system/vehicle system 100, and outputs a result of the determination as the steering state signal STs to the target steering torque generation unit 200 (step S10).

The target steering torque generation unit 200 generates the target steering torque Tref based on the vehicle speed Vs, a vehicle speed determination signal Vfail, the steering state signal STs, the steering angle θh, and a real yaw rate γre (step S20).

The conversion unit 500 converts the target steering torque Tref generated at the target steering torque generation unit 200 into the target twist angle Δθref (step S20). The target twist angle Δθref is output to the twist angle control unit 300.

The twist angle control unit 300 calculates the motor current command value Iref based on the target twist angle Δθref, the steering angle θh, the twist angle Δθ, and the motor angular velocity ωm (step S30).

Then, current control is performed to drive the motor 20 based on the motor current command value Iref output from the twist angle control unit 300 (step S40).

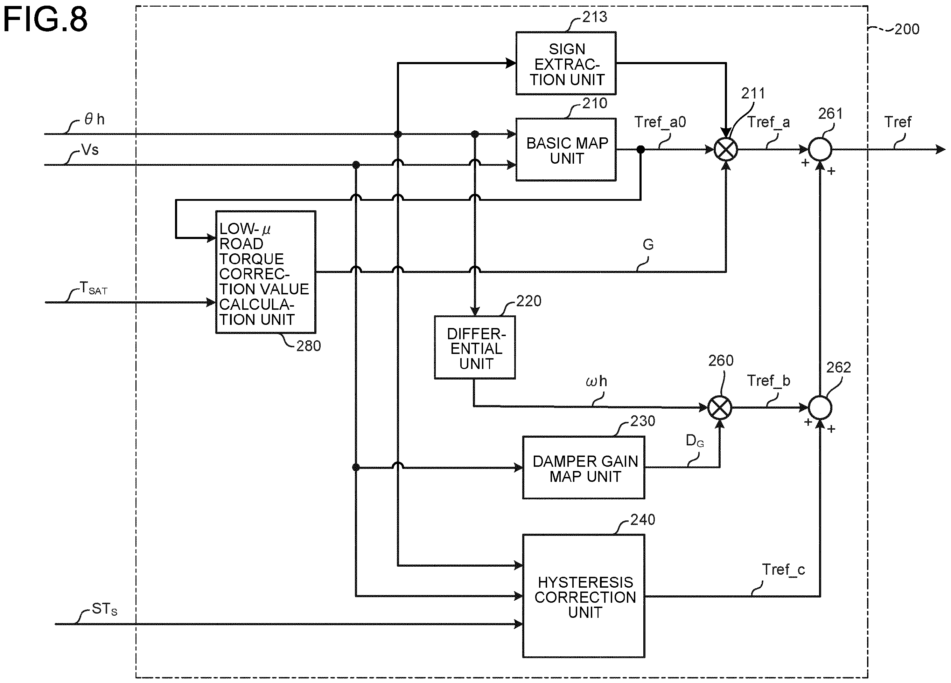

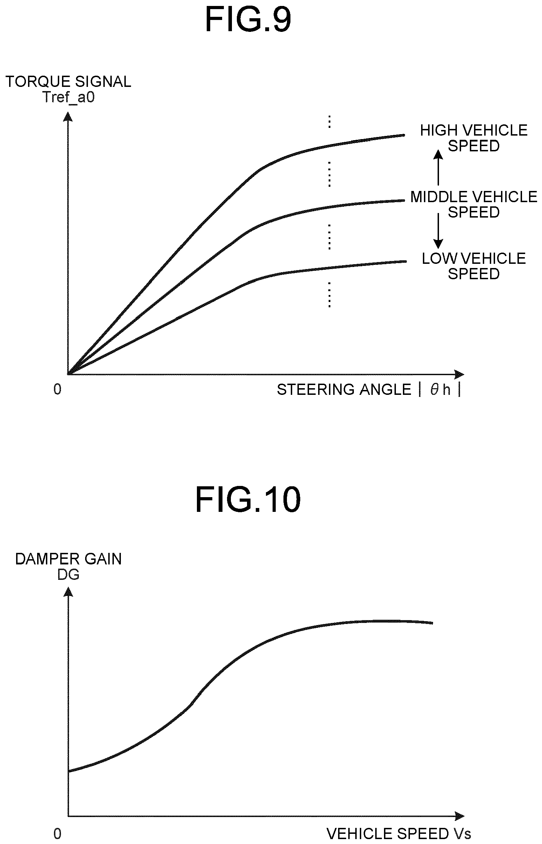

FIG. 8 is a block diagram illustrating an exemplary configuration of the target steering torque generation unit of the first embodiment. As illustrated in FIG. 8, the target steering torque generation unit 200 includes a basic map unit 210, a multiplication unit 211, a sign extraction unit 213, a differential unit 220, a damper gain map unit 230, a hysteresis correction unit 240, a SAT information correction unit 250, a multiplication unit 260, addition units 261, 262, and 263, and a low-μ road torque correction value calculation unit 280. FIG. 9 is a diagram illustrating exemplary characteristics of a basic map held by the basic map unit. FIG. 10 is a diagram illustrating exemplary characteristics of a damper gain map held by the damper gain map unit.

The steering angle θh and the vehicle speed Vs are input to the basic map unit 210. The basic map unit 210 outputs a torque signal Tref_a0 having the vehicle speed Vs as a parameter by using the basic map illustrated in FIG. 9. Specifically, the basic map unit 210 outputs the torque signal Tref_a0 in accordance with the vehicle speed Vs.

As illustrated in FIG. 9, the torque signal Tref_a0 has such a characteristic that the torque signal Tref_a0 increases as the magnitude (absolute value) |θh| of the steering angle θh increases. In addition, a torque signal Tref_a has such a characteristic that the torque signal Tref_a increases as the vehicle speed Vs increases. Note that, in FIG. 9, the map is configured in accordance with the magnitude |θh| of the steering angle θh but may be configured in accordance with the positive and negative values of the steering angle θh. In this case, the value of the torque signal Tref_a0 can be positive and negative values. Thus, the configuration of the low-μ road torque correction value calculation unit configured to calculate a correction value for the torque signal Tref_a0 needs to be changed as appropriate. The following description will be made on an aspect of outputting the torque signal Tref_a0 that is a positive value in accordance with the magnitude |θh| of the steering angle θh illustrated in FIG. 9.

The sign extraction unit 213 extracts the sign of the steering angle θh. Specifically, for example, the value of the steering angle θh is divided by the absolute value of the steering angle θh. Accordingly, the sign extraction unit 213 outputs "1" when the sign of the steering angle θh is "+", or outputs "-1" when the sign of the steering angle θh is "-".

The steering angle θh is input to the differential unit 220. The differential unit 220 calculates a rudder angular velocity ωh that is angular velocity information by differentiating the steering angle θh. The differential unit 220 outputs the calculated rudder angular velocity ωh to the multiplication unit 260.

The vehicle speed Vs is input to the damper gain map unit 230. The damper gain map unit 230 outputs a damper gain $D_G$ in accordance with the vehicle speed Vs by using a vehicle speed sensitive damper gain map illustrated in FIG. 10.

As illustrated in FIG. 10, the damper gain $D_G$ has such a characteristic that the damper gain $D_G$ gradually increases as the vehicle speed Vs increases. The damper gain $D_G$ may be variable in accordance with the steering angle θh.

The multiplication unit 260 multiplies the rudder angular velocity ωh output from the differential unit 220 by the damper gain $D_G$ output from the damper gain map unit 230, and outputs a result of the multiplication as a torque signal Tref_b to the addition unit 262.

The steering direction determination unit 400 performs determination as illustrated in, for example, FIG. 6. The steering angle θh, the vehicle speed Vs, and the steering state signal STs, which is a result of the determination illustrated in FIG. 6, are input to the hysteresis correction unit 240. The hysteresis correction unit 240 calculates a torque signal Tref_c based on the steering angle θh and the steering state signal STs by using Expressions (3) and (4) below. Note that, in Expressions (3) and (4) below, x represents the steering angle θh, and $y_R$ = Tref_c and $y_L$ = Tref_c represent the torque signal Tref_c. In addition, a coefficient "a" is a value larger than one, and a coefficient "c" is a value larger than zero. A coefficient Ahys indicates the output width of a hysteresis characteristic, and the coefficient "c" indicates the roundness of the hysteresis characteristic.

$$y_R = Ahys\{1 - a^{-c(x-b)}\} \qquad\qquad (3)$$

$$y_L = -Ahys\{1 - a^{c(x-b')}\} \qquad\qquad (4)$$

In a case of right steering, the torque signal Tref_c ($y_R$) is calculated by using Expression (3) above. In a case of left steering, the torque signal Tref_c ($y_L$) is calculated by using Expression (4) above. Note that, when switching is made from right steering to left steering or when switching is made from left steering to right steering, a coefficient "b" or "b'" indicated in Expression (5) or (6) below is substituted into Expressions (3) and (4) above after steering switching based on the values of final coordinates ($x_1$, $y_1$) that are the previous values of the steering angle $\theta h$ and the torque signal Tref_c. Accordingly, continuity through steering switching is maintained.

$$b = x_1 + (1/c)\log_a\{1 - (y_1/Ahys)\} \qquad\qquad (5)$$

$$b' = x_1 - (1/c)\log_a\{1 - (y_1/Ahys)\} \qquad\qquad (6)$$

Expressions (5) and (6) above can be derived by substituting $x_1$ into x and substituting $y_1$ into $y_R$ and $y_L$ in Expressions (3) and (4) above.
For example, when Napierian logarithm e is used as the coefficient "a", Expressions (3), (4), (5), and (6) above can be expressed as Expressions (7), (8), (9), and (10) below, respectively.

$$y_R = Ahys[1 - \exp\{-c(x - b)\}] \qquad\qquad (7)$$

$$y_L = -Ahys[\{1 - \exp\{c(x - b')\}] \qquad\qquad (8)$$

$$b = x_1 + (1/c)\log_e\{1 - (y_1/Ahys)\} \qquad\qquad (9)$$

$$b' = x_1 - (1/c)\log_e\{1 - (y_1/Ahys)\} \qquad\qquad (10)$$

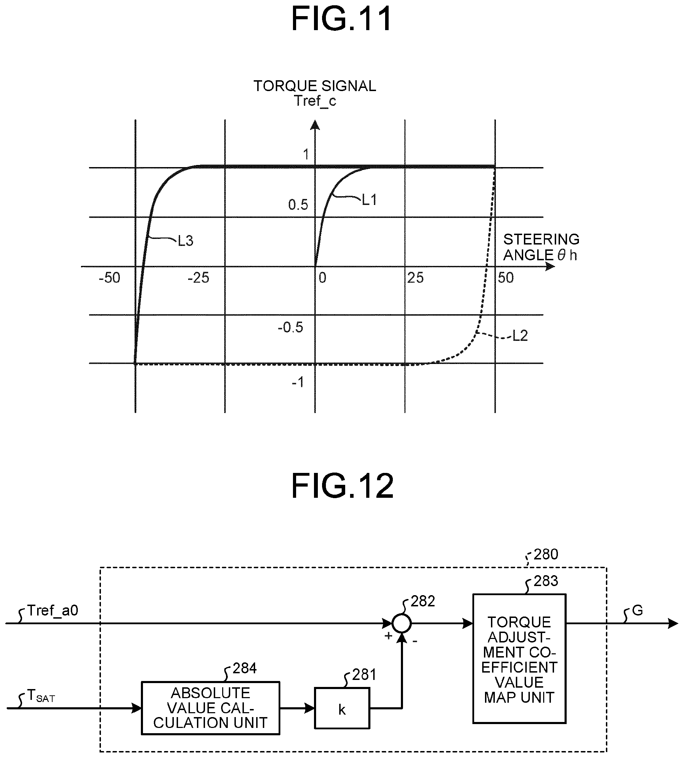

FIG. 11 is a diagram illustrating exemplary characteristics of the hysteresis correction unit. The example illustrated in FIG. 11 indicates an exemplary characteristic of the torque signal Tref_c subjected to hysteresis correction when Ahys = 1 [Nm] and c = 0.3 are set in Expressions (9) and (10) above and steering is performed from 0 [deg] to +50 [deg] or -50 [deg]. As illustrated in FIG. 11, the torque signal Tref_c output from the hysteresis correction unit 240 has a hysteresis characteristic such as the origin at zero → L1 (thin line) → L2 (dashed line) → L3 (bold line) .
Note that, the coefficient Ahys, which indicates the output width of the hysteresis characteristic, and the coefficient "c", which indicates the roundness thereof may be variable in accordance with one or both of the vehicle speed Vs and the steering angle $\theta h$.
In addition, the rudder angular velocity wh is obtained through the differential calculation on the steering angle $\theta h$ but is provided with low-pass filter (LPF) processing as appropriate to reduce influence of noise in a higher range. In addition, the differential calculation and the LPF processing may be performed with a high-pass filter (HPF) and a gain. Moreover the rudder angular velocity wh may be calculated by performing the differential calculation and the LPF processing not on the steering angle $\theta h$ but on a wheel angle $\theta 1$ detected by the upper angle sensor or a column angle $\theta 2$ detected by the lower angle sensor. The motor angular velocity $\omega m$ may be used as the angular velocity information in place of the rudder angular velocity wh, and in this case, the differential unit 220 is not needed.
FIG. 12 is a block diagram illustrating an exemplary configuration of the low-$\mu$ road torque correction value calculation unit of the first embodiment.
As illustrated in FIG. 12, the torque signal Tref_a0 output from the basic map unit 210 (refer to FIG. 8) and the self-aligning torque $T_{SAT}$ output from the SAT estimation unit 343 (refer to FIG. 3) are input to the low-$\mu$ road torque correction value calculation unit 280.

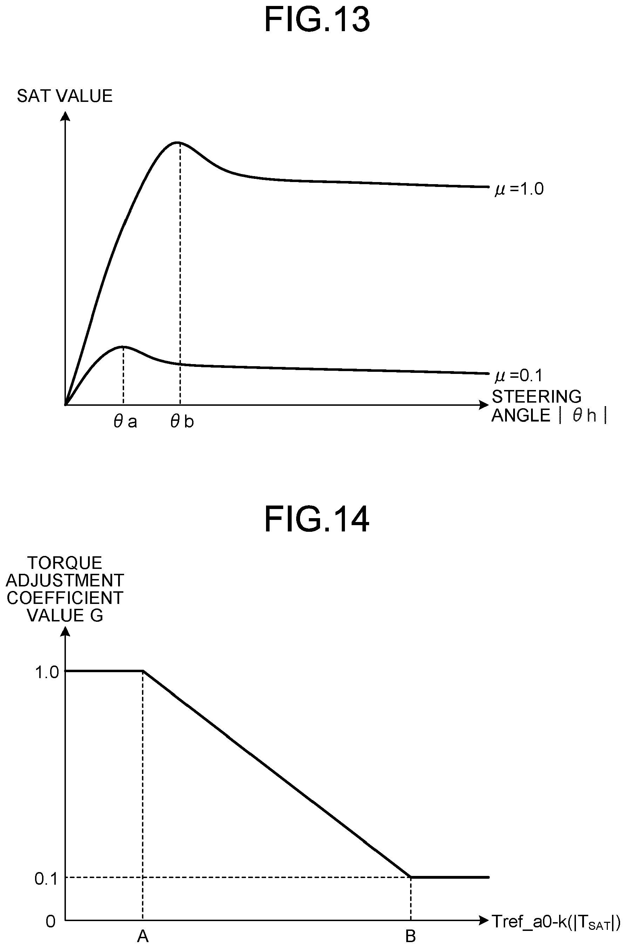

FIG. 13 is a diagram illustrating change of real self-aligning torque on a low-$\mu$ road.
The real self-aligning torque (also referred to as a SAT value) of a tire increases in accordance with increase of the magnitude (absolute value) |θh| of the steering angle θh. The SAT value is substantially proportional to the torque signal Tref_a0 output from the basic map unit 210 in a normal traveling state. Hereinafter, a proportionality coefficient of the SAT value for the torque signal Tref_a0 is "k". In addition, in the present disclosure, the "normal traveling state" indicates a state in which the tire grips a road surface.

Meanwhile, as illustrated in FIG. 13, the SAT value decreases due to tire slipping when road surface friction resistance significantly decreases due to, for example, a frozen road or a hydroplaning phenomenon in a puddle. FIG. 13 illustrates an example in which the SAT value decreases in a region equal to or larger than a steering angle θb when the road surface friction resistance μ is 1.0, and the SAT value decreases in a region equal to or larger than a steering angle θa when the road surface friction resistance μ is 0.1. In this manner, when the road surface friction resistance μ decreases and the tire slips, the torque signal Tref_a0 output from the basic map unit 210 and a value obtained by multiplying the SAT value by the proportionality coefficient k deviate from each other. Specifically, when the grip of the tire is lost but wheel steering force is controlled as in the normal traveling state, the driver does not notice loss of the grip force of the tire and an emergency avoidance operation potentially delays.

In the present embodiment, loss of the grip force of the tire is fed back to the driver based on a physical quantity generated through tire slipping so that the driver can perform an emergency avoidance operation. The following describes a configuration that enables feedback of loss of the grip force of the tire to the driver by using, as the physical quantity generated through tire slipping, the self-aligning torque $T_{SAT}$ estimated by the SAT estimation unit 343 (refer to FIG. 3).

As illustrated in FIG. 12, the low-μ road torque correction value calculation unit 280 of the first embodiment includes a proportionality coefficient multiplication unit 281, a subtraction unit 282, a torque adjustment coefficient value map unit 283, and an absolute value calculation unit 284.

The self-aligning torque $T_{SAT}$ is input to the absolute value calculation unit 284. The absolute value calculation unit 284 calculates the absolute value $|T_{SAT}|$ of the input self-aligning torque $T_{SAT}$. The proportionality coefficient multiplication unit 281 outputs, to the subtraction unit 282, a value $k(|T_{SAT}|)$ obtained by multiplying the absolute value $|T_{SAT}|$ of the input self-aligning torque by the predetermined proportionality coefficient k. The value of the proportionality coefficient k is set to be a value with which the torque signal Tref_a0 and the output value $k(|T_{SAT}|)$ of the proportionality coefficient multiplication unit 281 are substantially equal to each other in the normal traveling state.

The subtraction unit 282 outputs, to the torque adjustment coefficient value map unit 283, a value Tref_a0 - $k(|T_{SAT}|)$ obtained by subtracting the output value $k(|T_{SAT}|)$ of the proportionality coefficient multiplication unit 281 from the torque signal Tref_a0.

The torque adjustment coefficient value map unit 283 holds a torque adjustment coefficient value map representing the relation between the output value Tref_a0 - $k(|T_{SAT}|)$ of the subtraction unit 282 and a torque adjustment coefficient value G. FIG. 14 is a diagram illustrating exemplary characteristics of the torque adjustment coefficient value map held by the torque adjustment coefficient value map unit of the first embodiment.

In the present disclosure, the torque adjustment coefficient value G can have a positive value equal to or smaller than one. As illustrated in FIG. 14, the torque adjustment coefficient value map indicates an example in which the torque adjustment coefficient value G is "1.0" in a region where the output value Tref_a0 - $k(|T_{SAT}|)$ of the subtraction unit 282 is equal to or larger than zero and smaller than A, and the torque adjustment coefficient value G is "0.1" in a region where the output value Tref_a0 - $k(|T_{SAT}|)$ of the subtraction unit 282 is equal to or larger than B that is larger than A. In addition, the torque adjustment coefficient value map has such a characteristic that the torque adjustment coefficient value G gradually decreases from "1.0" to "0.1" in a region where the output value Tref_a0 - $k(|T_{SAT}|)$ of the subtraction unit 282 is equal to or larger than A and smaller than B.

Note that, the values A and B of the output value Tref_a0 - $k(|T_{SAT}|)$ of the subtraction unit 282 are set as appropriate. In addition, the value of the torque adjustment coefficient value G at or beyond the value B of the output value Tref_a0 - $k(|T_{SAT}|)$ of the subtraction unit 282 is exemplary and not limited to "0.1" described above. These values are desirably values with which discomfort is not provided to the steering feeling of the driver. In addition, the torque adjustment coefficient value map may have curved characteristics in place of linear characteristics as illustrated in FIG. 14.

The torque adjustment coefficient value map unit 283 derives the torque adjustment coefficient value G in accordance with the output value Tref_a0 - $k(|T_{SAT}|)$ of the subtraction unit 282 by using the torque adjustment coefficient value map illustrated in FIG. 14 and outputs the torque adjustment coefficient value G. Note that, the torque adjustment coefficient value G may be calculated by using an expression representing the relation between the output value Tref_a0 - $k(|T_{SAT}|)$ of the subtraction unit 282 and the torque adjustment coefficient value G.

Referring back to FIG. 8, the multiplication unit 211 multiplies the torque signal Tref_a0 output from the basic map unit 210 by the sign of the steering angle θh output from the sign extraction unit 213 and the torque adjustment coefficient value G output from the low-μ road torque correction value calculation unit 280, and outputs the multiplied torque signal Tref_a0 to the addition unit 261 as the torque signal Tref_a. Accordingly, the torque signal Tref_a in accordance with the positive and negative values of the steering angle θh is obtained.

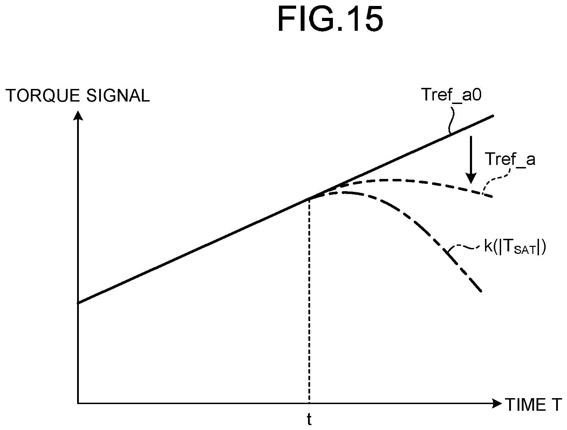

FIG. 15 is a diagram illustrating an exemplary effect of the torque adjustment coefficient value output from the low-μ road torque correction value calculation unit. FIG. 15 illustrates an example in which the traveling state is normal, in other words, the tire grips a road surface until time t, and the grip force of the tire is gradually lost after the time t.

As illustrated with a solid line in the drawing in FIG. 15, the torque signal Tref_a0 and the output value k($|T_{SAT}|$) of the proportionality coefficient multiplication unit 281 are substantially equal to each other until the time t (the solid line in the drawing). In this case, the output value Tref_a0 - k($|T_{SAT}|$) of the subtraction unit 282 is equal to or smaller than A, and the torque adjustment coefficient value G in this case is "1.0" (refer to FIG. 14) .

In FIG. 15, after time t, the difference between the torque signal Tref_a0, which is illustrated with the solid line in the drawing, and the output value k($|T_{SAT}|$) of the proportionality coefficient multiplication unit 281, which is illustrated with a dashed and single-dotted line in the drawing gradually increases. In this case, the output value Tref_a0 - k($|T_{SAT}|$) of the subtraction unit 282 gradually increases from A. The torque adjustment coefficient value G in this case gradually decreases from "1.0" (refer to FIG. 14). Thus, the torque signal Tref_a becomes smaller than that in the normal traveling state (the solid line in the drawing) as illustrated with a dashed line in the drawing. Accordingly, the steering feeling becomes lighter than in the normal traveling state, and the driver can recognize loss of the grip force of the tire and perform an appropriate emergency avoidance operation.

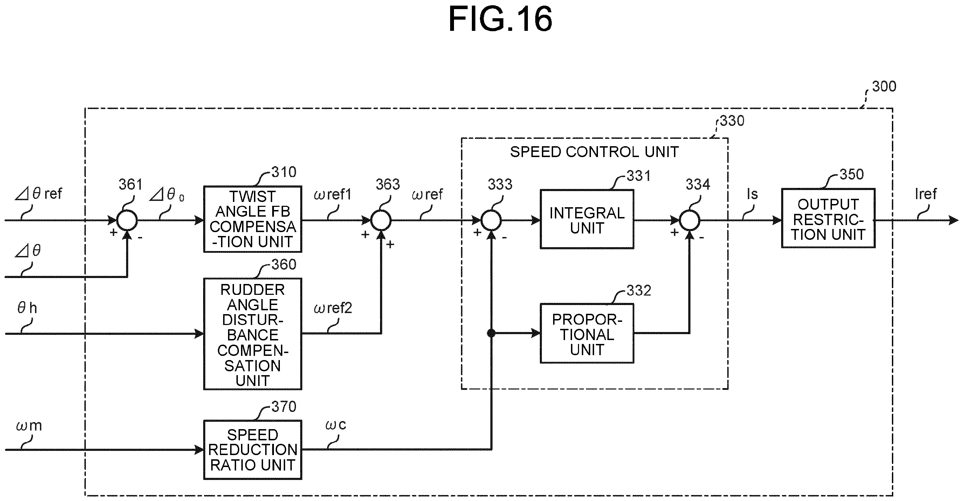

The twist angle control unit 300 of the first embodiment (refer to FIG. 5) will be described below with reference to FIG. 16.

FIG. 16 is a block diagram illustrating an exemplary configuration of the twist angle control unit of the first embodiment. The twist angle control unit 300 calculates the motor current command value Iref based on the target twist angle Δθref, the twist angle Δθ, the steering angle θh, and the motor angular velocity wm. The twist angle control unit 300 includes a twist angle feedback (FB) compensation unit 310, a speed control unit 330, a stabilization compensation unit 340, an output restriction unit 350, a rudder angle disturbance compensation unit 360, a subtraction unit 361, an addition unit 363, and a speed reduction ratio unit 370.

The target twist angle Δθref output from the conversion unit 500 is input to the subtraction unit 361 through addition. The twist angle Δθ is input to the subtraction unit 361 through subtraction. The steering angle θh is input to the rudder angle disturbance compensation unit 360. The motor angular velocity ωm is input to the stabilization compensation unit 340.

The twist angle FB compensation unit 310 multiplies a deviation Δθ0 between the target twist angle Δθref and the twist angle Δθ, which is calculated at the subtraction unit 361, by a compensation value CFB (transfer function) and outputs a target column angular velocity ωref1 with which the twist angle Δθ follows the target twist angle Δθref. The target column angular velocity ωref1 is output to the addition unit 363 through addition. The compensation value CFB may be a simple gain Kpp, or a typically used compensation value such as a PI control compensation value.

The rudder angle disturbance compensation unit 360 multiplies the steering angle θh by a compensation value Ch (transfer function) and outputs a target column angular velocity ωref2. The target column angular velocity ωref2 is output to the addition unit 363 through addition.

The addition unit 363 adds the target column angular velocity wref1 and the target column angular velocity ωref2, and outputs a result of the addition as a target column angular velocity wref to the speed control unit 330. Accordingly, it is possible to reduce influence on the torsion bar twist angle Δθ due to change of the steering angle θh input by the driver, thereby improving the capability of the twist angle Δθ to follow the target twist angle Δθref in response to abrupt steering.

When the steering angle θh changes in response to steering by the driver, the change of the steering angle θh affects the twist angle Δθ as disturbance, and error occurs to the target twist angle Δθref. In particular, upon abrupt steering, significant error occurs to the target twist angle Δθref due to change of the steering angle θh. A basic purpose of the rudder angle disturbance compensation unit 360 is to reduce influence of the steering angle θh as disturbance.

The speed control unit 330 calculates, through I-P control (proportional preceding PI control), a motor current command value Is with which a column angular velocity wc follows the target column angular velocity ωref. The column angular velocity ωc may be a value obtained by multiplying the motor angular velocity ωm by a speed reduction ratio 1/N of the speed reduction ratio unit 370 as a deceleration mechanism as illustrated in FIG. 16.

A subtraction unit 333 calculates the difference between (ωref - ωc) the target column angular velocity ωref and the column angular velocity ωc. An integral unit 331 integrates the difference between (ωref - ωc) the target column angular velocity ωref and the column angular velocity ωc and inputs a result of the integration to a subtraction unit 334 through addition.

A twist angular velocity ωt is also output to a proportional unit 332. The proportional unit 332 performs proportional processing with a gain Kvp on the column angular velocity ωc and inputs a result of the proportional processing to the subtraction unit 334 through subtraction. A result of the subtraction at the subtraction unit 334 is output as the motor current command value Is. Note that, the speed control unit 330 may calculate the motor current command value Is not by I-P control but by a typically used control method such as PI control, P (proportional) control, PID (proportional-integral-differential) control, PI-D control (differential preceding PID control), model matching control, or model reference control.

The upper and lower limit values of the motor current command value Is are set in advance at the output restriction unit 350. The motor current command value Iref is output with restriction on the upper and lower limit values of the motor current command value Is.

Note that, the configuration of the twist angle control unit 300 in the present embodiment is exemplary and may be different from the configuration illustrated in FIG. 16. For example, the twist angle control unit 300 may not include the rudder angle disturbance compensation unit 360, the addition unit 363, nor the speed reduction ratio unit 370.

(First modification)

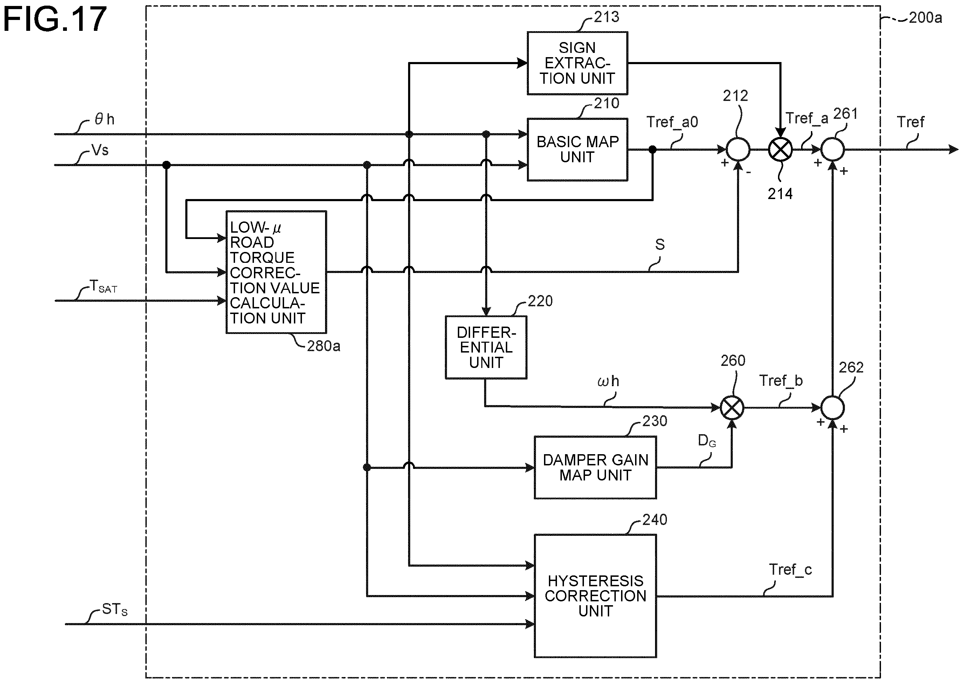

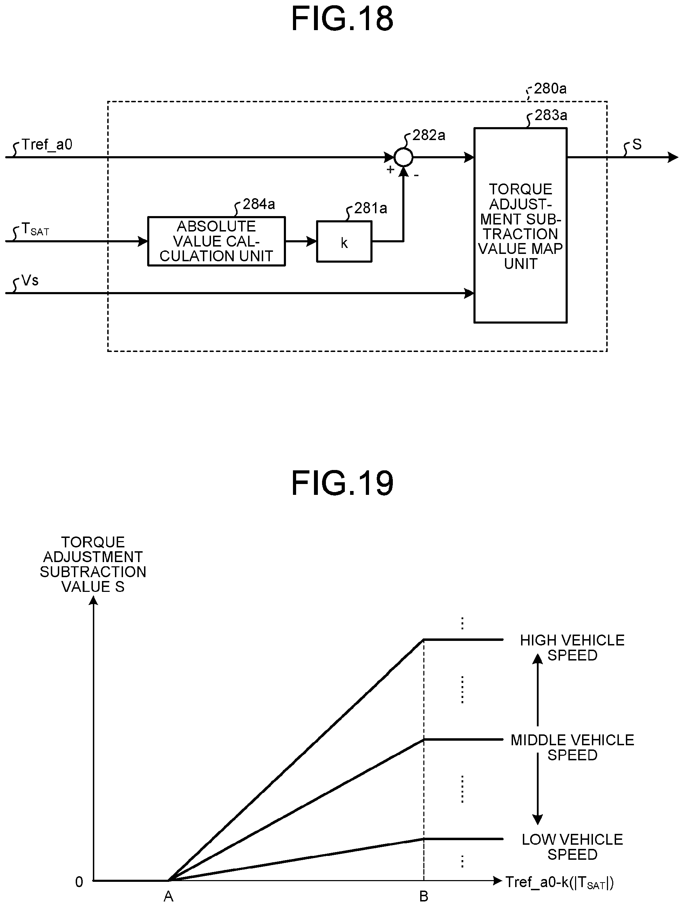

FIG. 17 is a block diagram illustrating an exemplary configuration of a target steering torque generation unit of a first modification of the first embodiment. FIG. 18 is a block diagram illustrating an exemplary configuration of a low-$\mu$ road torque correction value calculation unit of the first modification of the first embodiment. Note that, a component same as that in the configuration described above in the first embodiment is denoted by the same reference sign and duplicate description thereof is omitted.

As illustrated in FIG. 17, a target steering torque generation unit 200a includes a subtraction unit 212 in place of the multiplication unit 211. In addition, the target steering torque generation unit 200a includes a multiplication unit 214.

As illustrated in FIGS. 17 and 18, the vehicle speed Vs in addition to the torque signal Tref_a0 output from the basic map unit 210 and the self-aligning torque $T_{SAT}$ output from the SAT estimation unit 343 (refer to FIG. 3) is input to a low-$\mu$ road torque correction value calculation unit 280a.

As illustrated in FIG. 18, the low-$\mu$ road torque correction value calculation unit 280a of the first modification of the first embodiment includes a proportionality coefficient multiplication unit 281a, a subtraction unit 282a, a torque adjustment subtraction value map unit 283a, and an absolute value calculation unit 284a.

The self-aligning torque $T_{SAT}$ is input to the absolute value calculation unit 284a. The absolute value calculation unit 284a calculates the absolute value $|T_{SAT}|$ of the input self-aligning torque $T_{SAT}$. The proportionality coefficient multiplication unit 281a outputs, to the subtraction unit 282a, the value $k(|T_{SAT}|)$ obtained by multiplying the absolute value $|T_{SAT}|$ of the input self-aligning torque $T_{SAT}$ by the predetermined proportionality coefficient k. The value of the proportionality coefficient k is set to be a value with which the torque signal Tref_a0 and the output value $k(|T_{SAT}|)$ of the proportionality coefficient multiplication unit 281a are substantially equal to each other in the normal traveling state.

The subtraction unit 282a outputs, to the torque adjustment subtraction value map unit 283a, the value Tref_a0 - $k(|T_{SAT}|)$ obtained by subtracting the output value $k(|T_{SAT}|)$ of the proportionality coefficient multiplication unit 281a from the torque signal Tref_a0.

The torque adjustment subtraction value map unit 283a holds a torque adjustment subtraction value map representing the relation among the output value Tref_a0 - $k(|T_{SAT}|)$ of the subtraction unit 282a, a torque adjustment subtraction value S, and the vehicle speed Vs. FIG. 19 is a diagram illustrating exemplary characteristics of the torque adjustment subtraction value map held by the torque adjustment subtraction value map unit of the first modification of the first embodiment.

As illustrated in FIG. 19, the torque adjustment subtraction value map indicates an example in which the torque adjustment subtraction value S is "0" in a region where the output value Tref_a0 - $k(|T_{SAT}|)$ of the subtraction unit 282a is equal to or larger than zero and smaller than A, and the torque adjustment subtraction value S is a constant value in accordance with the vehicle speed Vs in a region where the output value Tref_a0 - $k(|T_{SAT}|)$ of the subtraction unit 282 is equal to or larger than B that is larger than A. In addition, the torque adjustment subtraction value map has such a characteristic that the torque adjustment subtraction value S gradually increases from "0" in a region where the output value Tref_a0 - $k(|T_{SAT}|)$ of the subtraction unit 282a is equal to or larger than A and smaller than B.

Note that, the values A and B of the output value Tref_a0 - $k(|T_{SAT}|)$ of the subtraction unit 282a are set as appropriate. In addition, the value of the torque adjustment subtraction value S at or beyond the value A of the output value Tref_a0 - $k(|T_{SAT}|)$ of the subtraction unit 282a is set to be a value that does not exceed the magnitude of the torque signal Tref_a0 that changes in accordance with the vehicle speed Vs. These values are desirably values with which discomfort is not provided to the steering feeling of the driver. In addition, the torque adjustment subtraction value map may have curved characteristics in place of linear characteristics as illustrated in FIG. 19.

The torque adjustment subtraction value map unit 283a derives the torque adjustment subtraction value S in accordance with the output value Tref_a0 - $k(|T_{SAT}|)$ of the subtraction unit 282a by using the torque adjustment subtraction value map illustrated in FIG. 19 and outputs the torque adjustment subtraction value S. Note that, the torque adjustment subtraction value S may be calculated by using an expression representing the relation among the output value Tref_a0 - $k(|T_{SAT}|)$ of the subtraction unit 282a, the torque adjustment subtraction value S, and the vehicle speed Vs.

Referring back to FIG. 17, the subtraction unit 212 subtracts, from the torque signal Tref_a0 output from the basic map unit 210, the torque adjustment subtraction value S output from the low-$\mu$ road torque correction value calculation unit 280a. The multiplication unit 214 multiplies the output value of the subtraction unit 212 by the sign of the steering angle θh output from the sign extraction unit 213, and outputs the value to the addition unit 261 as the torque signal Tref_a. Accordingly, the torque signal Tref_a in accordance with the positive and negative values of the steering angle θh is obtained.

With the configuration of the first modification of the first embodiment illustrated in FIGS. 17 and 18, as well, similarly to the above-described configuration according to the first embodiment, the torque signal Tref_a in a state in which the grip force of the tire is lost (the dashed line in FIG. 15) can be made smaller than that in the normal traveling state (the solid line in FIG. 15). Accordingly, the steering feeling becomes lighter than in the normal traveling state, and the driver can recognize loss of the grip force of the tire and perform an appropriate emergency avoidance operation.

(Second modification)

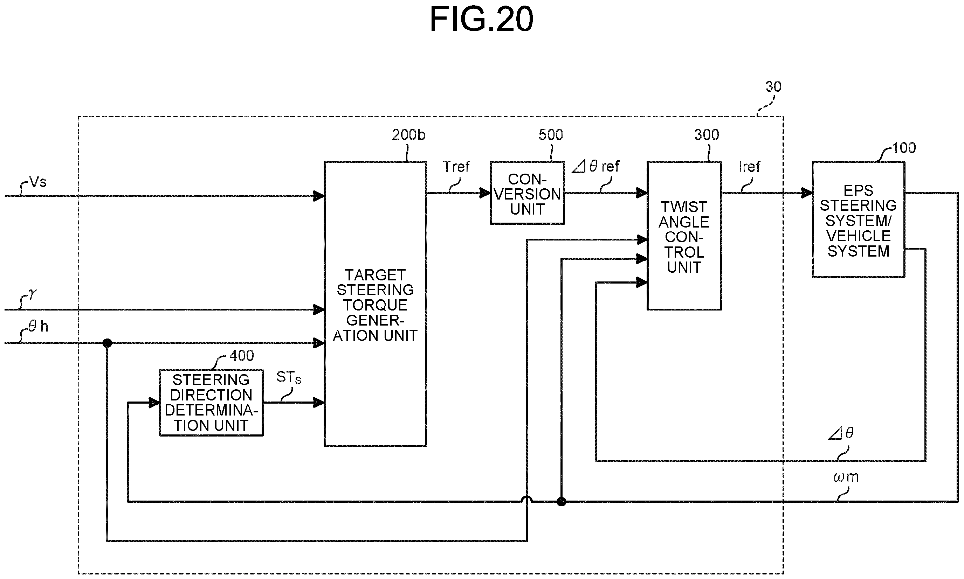

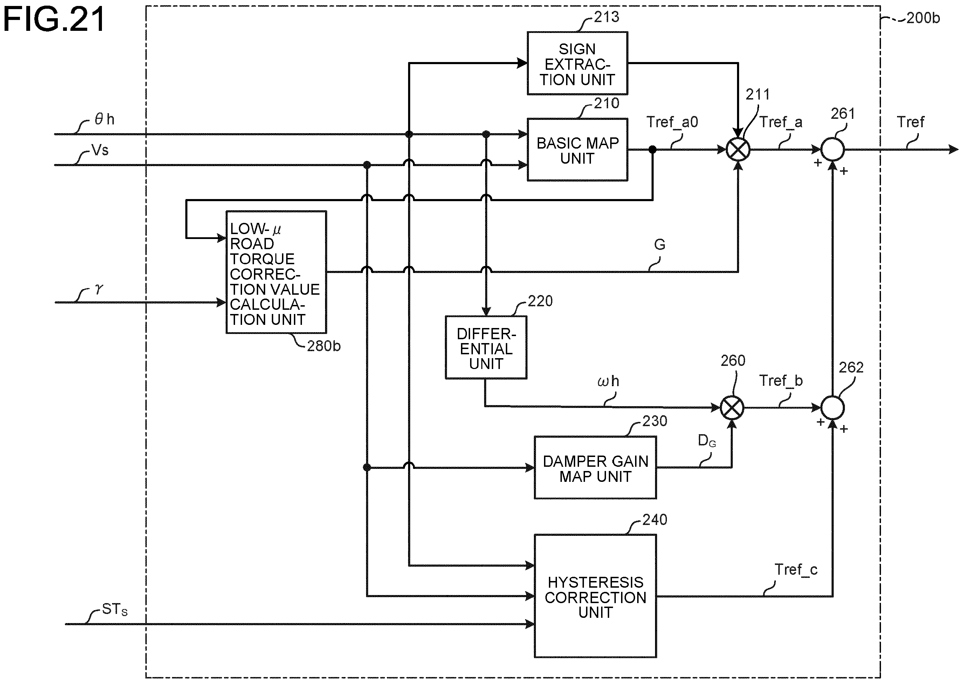

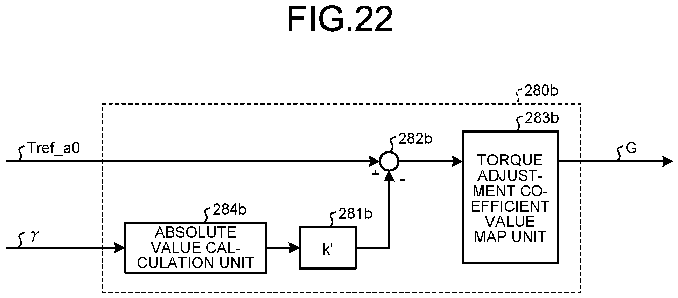

FIG. 20 is a diagram illustrating an exemplary internal block configuration of a control unit according to a second modification of the first embodiment. FIG. 21 is a block diagram illustrating an exemplary configuration of a target steering torque generation unit of the second modification of the first embodiment. FIG. 22 is a block diagram illustrating an exemplary configuration of a low-$\mu$ road torque correction value calculation unit of the second modification of the first embodiment. Note that, a component same as that in the configuration described above in the first embodiment is denoted by the same reference sign and duplicate description thereof is omitted.

In the configuration of the second modification of the first embodiment, as illustrated in FIG. 20, a real yaw rate $\gamma$ detected by a yaw rate sensor 15 (refer to FIG. 1) is input to a target steering torque generation unit 200b. In the second modification of the first embodiment, a configuration that enables feedback of loss of the grip force of the tire to the driver by using the real yaw rate $\gamma$ as the physical quantity generated through tire slipping will be described below.

As illustrated in FIGS. 21 and 22, the real yaw rate $\gamma$ is input to a low-$\mu$ road torque correction value calculation unit 280b in place of the torque signal Tref_a0 output from the basic map unit 210 and the self-aligning torque $T_{SAT}$ output from the SAT estimation unit 343 (refer to FIG. 3).

As illustrated in FIG. 22, the low-$\mu$ road torque correction value calculation unit 280b of the second modification of the first embodiment includes a proportionality coefficient multiplication unit 281b, a subtraction unit 282b, a torque adjustment coefficient value map unit 283b, and an absolute value calculation unit 284b.

The real yaw rate $\gamma$ is input to the absolute value calculation unit 284b. The absolute value calculation unit 284b calculates the absolute value $|\gamma|$ of the input real yaw rate $\gamma$. The proportionality coefficient multiplication unit 281b outputs, to the subtraction unit 282b, a value k'$|\gamma|$ obtained by multiplying the absolute value $|\gamma|$ of the input real yaw rate by a predetermined proportionality coefficient k'. The value of the proportionality coefficient k' is set to be a value with which the torque signal Tref_a0 and the output value k'$|\gamma|$ of the proportionality coefficient multiplication unit 281b are substantially equal to each other in the normal traveling state.

The subtraction unit 282b outputs, to the torque adjustment coefficient value map unit 283b, a value Tref_a0 - k$|\gamma|$ obtained by subtracting the output value k'$|\gamma|$ of the proportionality coefficient multiplication unit 281b from the torque signal Tref_a0.

The torque adjustment coefficient value map unit 283b holds a torque adjustment coefficient value map representing the relation between the output value Tref_a0 - k'$|\gamma|$ of the subtraction unit 282b and the torque adjustment coefficient value G. Characteristics of the torque adjustment coefficient value map according to the second modification of the first embodiment are same as those of the torque adjustment coefficient value map held by the torque adjustment coefficient value map unit 283 of the first embodiment illustrated in FIG. 14, and description thereof can be given by replacing the output value Tref_a0 - k($|T_{SAT}|$) of the subtraction unit 282 in its description with the output value Tref_a0 - k'$|\gamma|$ of the subtraction unit 282b.

The torque adjustment coefficient value map unit 283b derives the torque adjustment coefficient value G in accordance with the output value Tref_a0 - k'$|\gamma|$ of the subtraction unit 282b by using the above-described torque adjustment coefficient value map, and outputs the torque adjustment coefficient value G. Note that, the torque adjustment coefficient value G may be calculated by using an expression representing the relation between the output value Tref_a0 - k'$|\gamma|$ of the subtraction unit 282b and the torque adjustment coefficient value G.

Referring back to FIG. 21, the multiplication unit 211 multiplies the torque signal Tref_a0 output from the basic map unit 210 by the sign of the steering angle θh output from the sign extraction unit 213 and the torque adjustment coefficient value G output from the low-$\mu$ road torque correction value calculation unit 280b, and outputs the multiplied torque signal Tref_a0 to the addition unit 261 as the torque signal Tref_a. Accordingly, the torque signal Tref_a in accordance with the positive and negative values of the steering angle θh is obtained.

With the configuration of the second modification of the first embodiment illustrated in FIGS. 20 to 22, as well, similarly to the above-described configuration according to the first embodiment, the torque signal Tref_a in a state in which the grip force of the tire is lost (the dashed line in FIG. 15) can be made smaller than that in the normal traveling state (the solid line in FIG. 15). Accordingly, the steering feeling becomes lighter than in the normal traveling state, and the driver can recognize loss of the grip force of the tire and perform an appropriate emergency avoidance operation.

(Third modification)

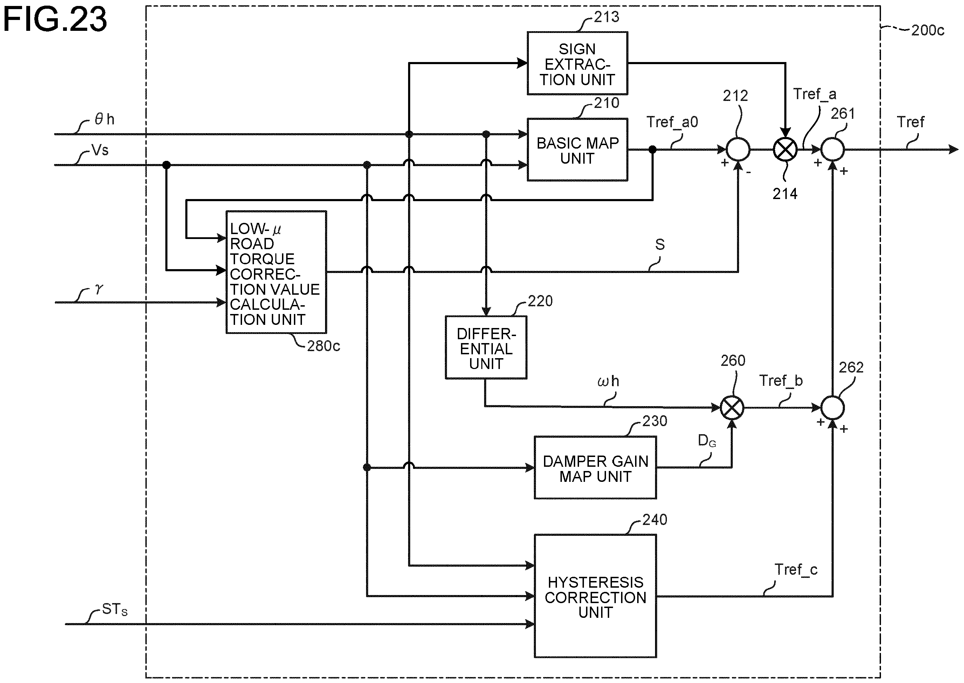

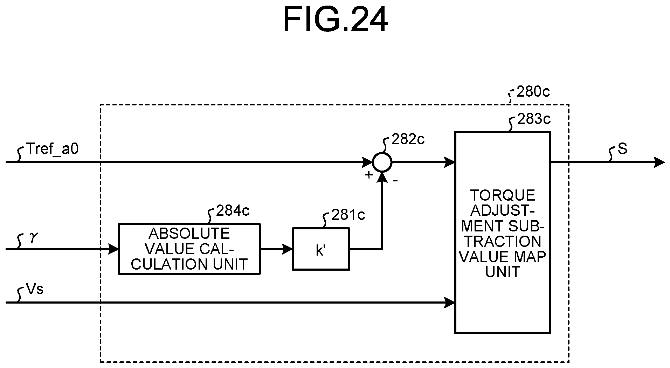

FIG. 23 is a block diagram illustrating an exemplary configuration of a target steering torque generation unit of a third modification of the first embodiment. FIG. 24 is a block diagram illustrating an exemplary configuration of a low-$\mu$ road torque correction value calculation unit of the third modification of the first embodiment. Note that, a component same as that in the configuration described above in the second modification of the first embodiment is denoted by the same reference sign and duplicate description thereof is omitted.

As illustrated in FIG. 23, a target steering torque generation unit 200c includes the subtraction unit 212 in place of the multiplication unit 211.

As illustrated in FIGS. 23 and 24, the vehicle speed Vs in addition to the torque signal Tref_a0 output from the basic map unit 210 and the real yaw rate $\gamma$ detected by the yaw rate sensor 15 (refer to FIG. 1) is input to a low-$\mu$ road torque correction value calculation unit 280c.

As illustrated in FIG. 24, the low-$\mu$ road torque correction value calculation unit 280c of the first modification of the first embodiment includes a proportionality coefficient multiplication unit 281c, a subtraction unit 282c, a torque adjustment subtraction value map unit 283c, and an absolute value calculation unit 284c.

The real yaw rate $\gamma$ is input to the absolute value calculation unit 284c. The absolute value calculation unit 284c calculates the absolute value $|\gamma|$ of the input real yaw rate $\gamma$. The proportionality coefficient multiplication unit 281c outputs, to the subtraction unit 282c, the value k'$|\gamma|$ obtained by multiplying the absolute value $|\gamma|$ of the input real yaw rate by the predetermined proportionality coefficient k'. The value of the proportionality coefficient k' is set to be a value with which the torque signal Tref_a0 and the output value k'$|\gamma|$ of the proportionality coefficient multiplication unit 281c are substantially equal to each other in the normal traveling state.

The subtraction unit 282c outputs, to the torque adjustment subtraction value map unit 283c, the value Tref_a0 - k'$|\gamma|$ obtained by subtracting the output value k'$\gamma$ of the proportionality coefficient multiplication unit 281c from the torque signal Tref_a0.

The torque adjustment subtraction value map unit 283c holds a torque adjustment subtraction value map representing the relation among the output value Tref_a0 - k'$|\gamma|$ of the subtraction unit 282c, the torque adjustment subtraction value S, and the vehicle speed Vs. Characteristics of the torque adjustment subtraction value map according to the third modification of the first embodiment are same as those of the torque adjustment subtraction value map held by the torque adjustment subtraction value map unit 283a of the first modification of the first embodiment illustrated in FIG. 24, and description thereof can be given by replacing the output value Tref_a0 - k($|T_{SAT}|$) of the subtraction unit 282a in its description with the output value Tref_a0 - k'$|\gamma|$ of the subtraction unit 282c.

The torque adjustment subtraction value map unit 283c derives the torque adjustment subtraction value S in accordance with the output value Tref_a0 - k'$|\gamma|$ of the subtraction unit 282c by using the above-described torque adjustment subtraction value map, and outputs the torque adjustment subtraction value S. Note that, the torque adjustment subtraction value S may be calculated by using an expression representing the relation among the output value Tref_a0 - k'$|\gamma|$ of the subtraction unit 282c, the torque adjustment subtraction value S, and the vehicle speed Vs.

Referring back to FIG. 23, the subtraction unit 212 subtracts, from the torque signal Tref_a0 output from the basic map unit 210, the torque adjustment subtraction value S output from the low-$\mu$ road torque correction value calculation unit 280c. The multiplication unit 214 multiplies the output value of the subtraction unit 212 by the sign of the steering angle $\theta$h output from the sign extraction unit 213, and outputs the value to the addition unit 261 as the torque signal Tref_a. Accordingly, the torque signal Tref_a in accordance with the positive and negative values of the steering angle $\theta$h is obtained.

With the configuration of the third modification of the first embodiment illustrated in FIGS. 23 and 24, as well, similarly to the above-described configuration according to the first embodiment, the torque signal Tref_a in a state in which the grip force of the tire is lost (the dashed line in FIG. 15) can be made smaller than that in the normal traveling state (the solid line in FIG. 15). Accordingly, the steering feeling becomes lighter than in the normal traveling state, and the driver can recognize loss of the grip force of the tire and perform an appropriate emergency avoidance operation.

Note that, the first embodiment and its first to third modifications described above exemplarily describe configurations in which the self-aligning torque $T_{SAT}$ estimated by the SAT estimation unit 343 (refer to FIG. 3) and the real yaw rate $\gamma$ detected by the yaw rate sensor 15 (refer to FIG. 1) are used as the physical quantity generated through tire slipping, but effects same as those of the first embodiment and its first to third modifications described above can be obtained, for example, with a configuration in which real lateral acceleration detected by a lateral acceleration sensor 16 (refer to FIG. 1) is used as the physical quantity generated through tire slipping.

(Second embodiment)

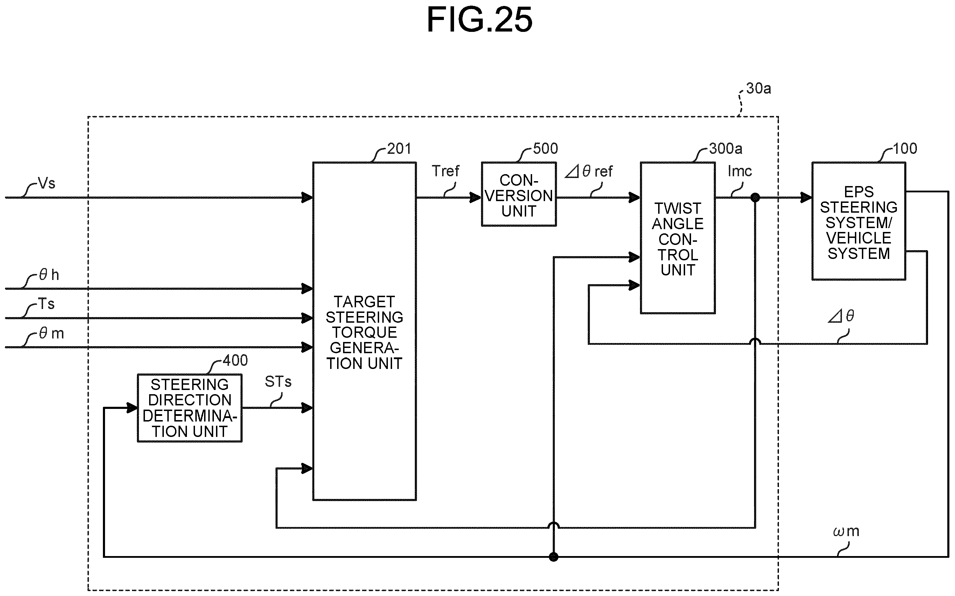

FIG. 25 is a diagram illustrating an exemplary internal block configuration of a control unit according to a second embodiment. Note that, a component same as that in the configuration described above in the first embodiment is denoted by the same reference sign and duplicate description thereof is omitted. A control unit (ECU) 30a according to the second embodiment is different from that of the first embodiment in the configurations of a target steering torque generation unit 201 and a twist angle control unit 300a.

The steering torque Ts and a motor angle $\theta m$ in addition to the steering angle $\theta h$, the vehicle speed Vs, and the vehicle speed determination signal Vfail are input to the target steering torque generation unit 201.

The twist angle control unit 300a calculates a motor current command value Imc with which the twist angle $\Delta\theta$ is equal to the target twist angle $\Delta\theta ref$. The motor 20 is driven by the motor current command value Imc.

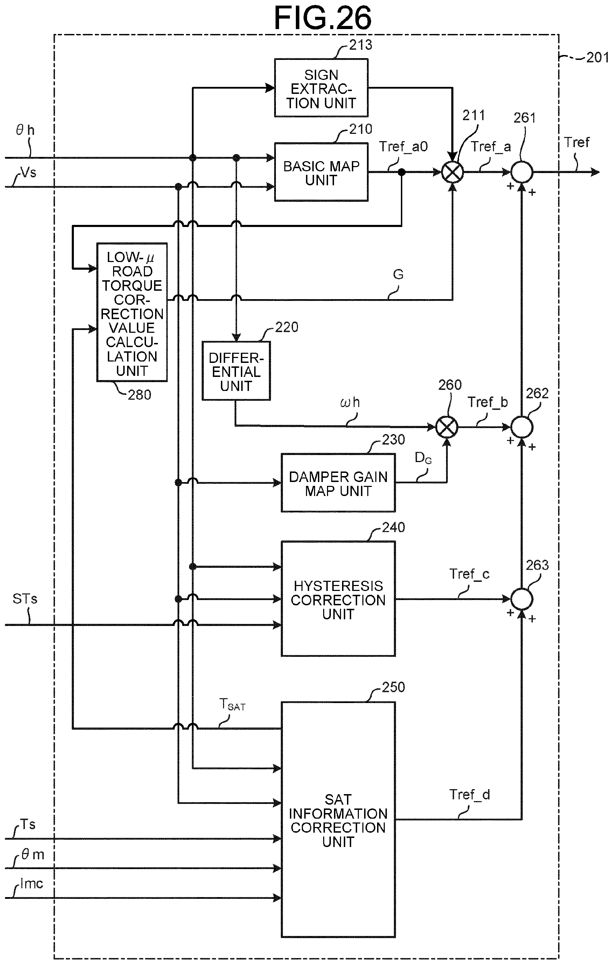

FIG. 26 is a block diagram illustrating an exemplary configuration of the target steering torque generation unit of the second embodiment. As illustrated in FIG. 26, the target steering torque generation unit 201 of the second embodiment includes the SAT information correction unit 250 and an addition unit 263 in addition to the configuration described in the first embodiment.

The steering angle $\theta h$, the vehicle speed Vs, the steering torque Ts, the motor angle $\theta m$, and the motor current command value Imc are input to the SAT information correction unit 250. The SAT information correction unit 250 calculates self-aligning torque (SAT) based on the steering torque Ts, the motor angle $\theta m$, and the motor current command value Imc and further provides filter processing, gain multiplication, and restriction processing to calculate a torque signal (first torque signal) Tref_d.

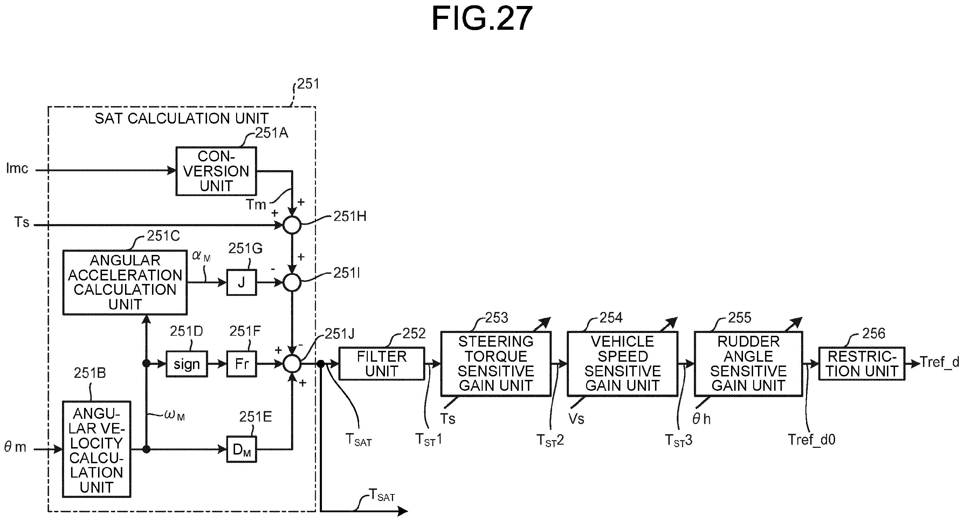

FIG. 27 is a block diagram illustrating an exemplary configuration of the SAT information correction unit. The SAT information correction unit 250 includes a SAT calculation unit 251, a filter unit 252, a steering torque sensitive gain unit 253, a vehicle speed sensitive gain unit 254, a rudder angle sensitive gain unit 255, and a restriction unit 256.

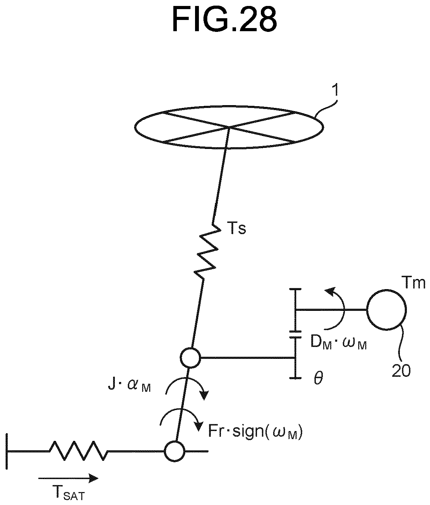

The status of torque generated between a road surface and steering will be described below with reference to FIG. 28. FIG. 28 is a schematic diagram illustrating the status of torque generated between the road surface and steering.

The steering torque Ts is generated as the driver steers the wheel, and the motor 20 generates assist torque (motor torque) Tm in accordance with the steering torque Ts. As a result, the wheel is rotated, self-aligning torque $T_{SAT}$ is generated as reaction force. In this case, torque as resistance against wheel steering is generated by column-shaft conversion inertia (inertia that acts on the column shaft by the motor 20 (rotor thereof), the deceleration mechanism, and the like) J and friction (static friction) Fr. In addition, physical torque (viscosity torque) expressed as a damper term (damper coefficient $D_M$) is generated by the rotational speed of the motor 20. The equation of motion in Expression (12) below is obtained from balancing among these forces.

$$J \times \alpha_M + Fr \times \text{sign}(\omega_M) + D_M \times \omega_M = Tm + Ts + T_{SAT} \qquad (12)$$

In Expression (12) above, $\omega_M$ is a motor angular velocity subjected to column-shaft conversion (conversion into a value for the column shaft), and $\alpha_M$ is a motor angular acceleration subjected to column-shaft conversion. When Expression (12) above is solved for $T_{SAT}$, Expression (13) below is obtained.

$$T_{SAT} = -Tm - Ts + J \times \alpha_M + Fr \times \text{sign}(\omega_M) + D_M \times \omega_M \qquad (13)$$

As understood from Expression (13) above, when the column-shaft conversion inertia J, the static friction Fr, and the damper coefficient DM are determined as constants in advance, the self-aligning torque $T_{SAT}$ can be calculated from the motor angular velocity $\omega_M$, the motor angular acceleration $\alpha_M$, the assist torque Tm, and the steering torque Ts. Note that, for simplification, the column-shaft conversion inertia J may be a value converted for the column shaft by using a relational expression of motor inertia and a speed reduction ratio.

The steering torque Ts, the motor angle $\theta m$, and the motor current command value Imc are input to the SAT calculation unit 251. The SAT calculation unit 251 calculates the self-aligning torque $T_{SAT}$ by using Expression (13) above. The SAT calculation unit 251 includes a conversion unit 251A, an angular velocity calculation unit 251B, an angular acceleration calculation unit 251C, a block 251D, a block 251E, a block 251F, a block 251G, and adders 251H, 251I, and 251J.

The motor current command value Imc is input to the conversion unit 251A. The conversion unit 251A calculates the assist torque Tm subjected to column-shaft conversion through multiplication by a predetermined gear ratio and a predetermined torque constant.

The motor angle $\theta m$ is input to the angular velocity calculation unit 251B. The angular velocity calculation unit 251B calculates the motor angular velocity $\omega_M$ subjected to column-shaft conversion through differential processing and gear ratio multiplication.

The motor angular velocity $\omega_M$ is input to the angular acceleration calculation unit 251C. The angular acceleration calculation unit 251C calculates the motor angular acceleration $\alpha_M$ subjected to column-shaft conversion by differentiating the motor angular velocity $\omega_M$.

Then, the self-aligning torque $T_{SAT}$ is calculated with a configuration as illustrated in FIG. 27 based on Math. 8 by the block 251D, the block 251E, the block 251F, the block 251G, and the adders 251H, 251I, and 251J by using the input steering torque Ts and the assist torque Tm, the motor angular velocity $\omega_M$, and the motor angular acceleration $\alpha_M$ thus calculated.

The motor angular velocity $\omega_M$ output from the angular velocity calculation unit 251B is input to the block 251D. The block 251D functions as a sign function and outputs the sign of the input data.

The motor angular velocity $\omega_M$ output from the angular velocity calculation unit 251B is input to the block 251E. The block 251E multiplies the input data by the damper coefficient $D_M$ and outputs a result of the multiplication.

The block 251F multiplies the input data from the block 251D by the static friction Fr and outputs a result of the multiplication.

The motor angular acceleration $\alpha_M$ output from the angular acceleration calculation unit 251C is input to the block 251G. The block 251G multiplies the input data by the column-shaft conversion inertia J and outputs a result of the multiplication.

The adder 251H adds the steering torque Ts and the assist torque Tm output from the conversion unit 251A.

The adder 251I subtracts the output from the block 251G from the output from the adder 251H.

The adder 251J adds the output from the block 251E and the output from the block 251F and subtracts the output from the adder 251I.

With the above-described configuration, Expression (13) above can be achieved. Specifically, the self-aligning torque $T_{SAT}$ is calculated by the configuration of the SAT calculation unit 251 illustrated in FIG. 27.

Note that, when the column angle can be directly detected, the column angle may be used as angle information in place of the motor angle θm. In this case, column-shaft conversion is unnecessary. In addition, a signal obtained by subjected the motor angular velocity ωm from the EPS steering system/vehicle system 100 to column-shaft conversion may be input as the motor angular velocity $\omega_M$ in place of the motor angle θm, and the differential processing on the motor angle θm may be omitted. Moreover, the self-aligning torque $T_{SAT}$ may be calculated by a method other than that described above or may be a measured value, not a calculated value.

To utilize the self-aligning torque $T_{SAT}$ calculated at the SAT calculation unit 251 and appropriately convey the self-aligning torque $T_{SAT}$ to the driver as a steering feeling, information desired to be conveyed is extracted from the self-aligning torque $T_{SAT}$ by the filter unit 252, the amount of conveyance is adjusted by the steering torque sensitive gain unit 253, the vehicle speed sensitive gain unit 254, and the rudder angle sensitive gain unit 255, and the upper and lower limit values thereof are further adjusted by the restriction unit 256. Note that, in the present disclosure, the self-aligning torque $T_{SAT}$ calculated at the SAT calculation unit 251 is also output to the target steering torque generation unit 201.

The self-aligning torque $T_{SAT}$ from the SAT calculation unit 251 is input to the filter unit 252. The filter unit 252 performs filter processing on the self-aligning torque $T_{SAT}$ through, for example, a bandpass filter and outputs SAT information $T_{ST}1$.

The SAT information $T_{ST}1$ output from the filter unit 252 and the steering torque Ts are input to the steering torque sensitive gain unit 253. The steering torque sensitive gain unit 253 sets a steering torque sensitive gain.

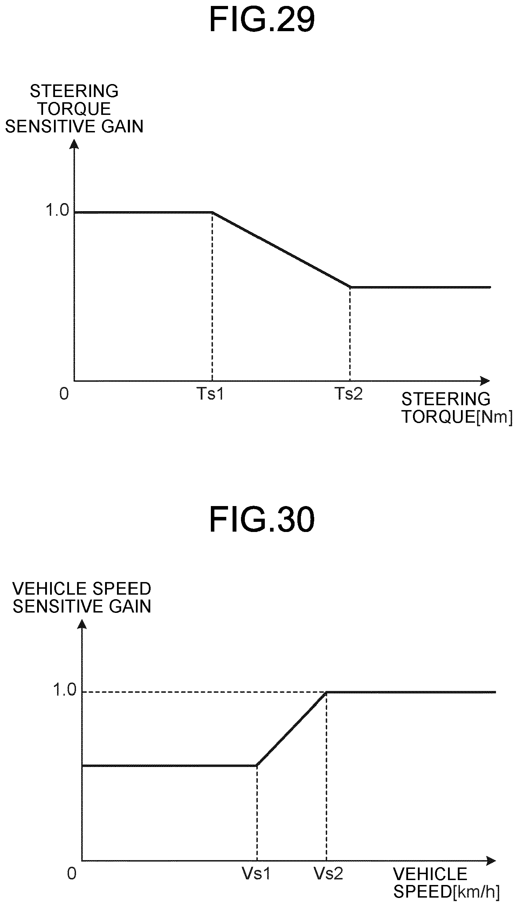

FIG. 29 is a diagram illustrating exemplary characteristics of the steering torque sensitive gain. As illustrated in FIG. 29, the steering torque sensitive gain unit 253 sets the steering torque sensitive gain so that sensitivity is high at on-center vicinity corresponding to a straight traveling state. The steering torque sensitive gain unit 253 multiplies the SAT information $T_{ST}1$ by the steering torque sensitive gain set in accordance with the steering torque Ts and outputs SAT information $T_{ST}2$.

FIG. 29 illustrates an example in which the steering torque sensitive gain is fixed at 1.0 when the steering torque Ts is equal to or smaller than Ts1 (for example, 2 Nm), fixed at a value smaller than 1.0 when the steering torque Ts is equal to or larger than Ts2 (> Ts1) (for example, 4 Nm), or set to decrease at a constant ratio when the steering torque Ts is between Ts1 and Ts2.

The SAT information $T_{ST}2$ output from the steering torque sensitive gain unit 253 and the vehicle speed Vs are input to the vehicle speed sensitive gain unit 254. The vehicle speed sensitive gain unit 254 sets a vehicle speed sensitive gain.

FIG. 30 is a diagram illustrating exemplary characteristics of the vehicle speed sensitive gain. As illustrated in FIG. 30, the vehicle speed sensitive gain unit 254 sets the vehicle speed sensitive gain so that sensitivity at fast travel is high. The vehicle speed sensitive gain unit 254 multiplies the SAT information $T_{ST}2$ by the vehicle speed sensitive gain set in accordance with the vehicle speed Vs, and outputs SAT information $T_{ST}3$.

FIG. 30 illustrates an example in which the vehicle speed sensitive gain is fixed at 1.0 when the vehicle speed Vs is equal to or higher than Vs2 (for example, 70 km/h), fixed at a value smaller than 1.0 when the vehicle speed Vs is equal to or smaller than Vs1 (<Vs2) (for example, 50 km/h), or set to increase at a constant ratio when the vehicle speed Vs is between Vs1 and Vs2.

The SAT information $T_{ST}3$ output from the vehicle speed sensitive gain unit 254 and the steering angle θh are input to the rudder angle sensitive gain unit 255. The rudder angle sensitive gain unit 255 sets a rudder angle sensitive gain.

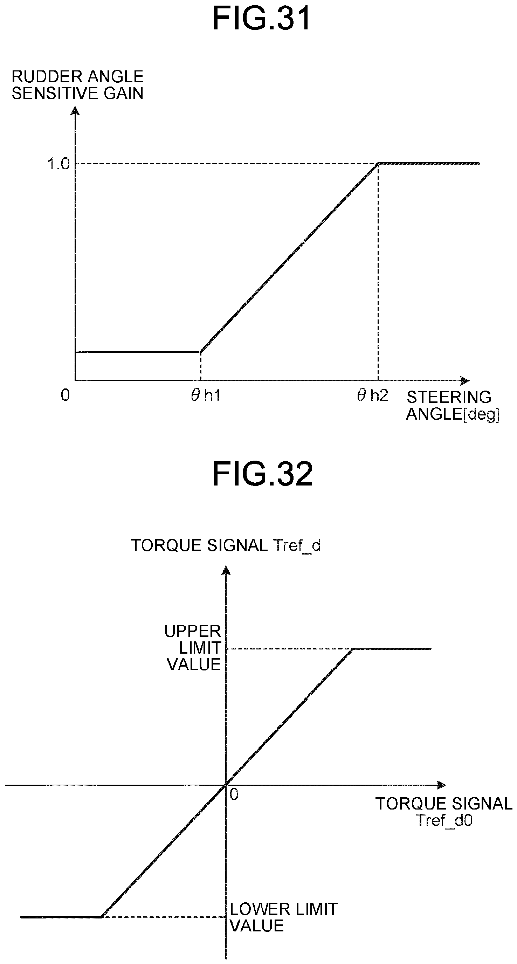

FIG. 31 is a diagram illustrating exemplary characteristics of the rudder angle sensitive gain. As illustrated in FIG. 31, the rudder angle sensitive gain unit 255 sets the rudder angle sensitive gain to start acting at a predetermined steering angle and have high sensitivity when the steering angle is large. The rudder angle sensitive gain unit 255 multiplication the SAT information $T_{ST}3$ by the rudder angle sensitive gain set in accordance with the steering angle $\theta$h, and outputs a torque signal Tref_d0.

FIG. 31 illustrates an example in which the rudder angle sensitive gain is a predetermined gain value G$\alpha$ when the steering angle $\theta$h is equal to or smaller than $\theta$h1 (for example, 10 deg), fixed at 1.0 when the steering angle $\theta$h is equal to or larger than $\theta$h2 (for example, 30 deg), or set to increase at a constant ratio when the steering angle $\theta$h is between $\theta$h1 and $\theta$h2. To have high sensitivity when the steering angle $\theta$h is large, G$\alpha$ may be set to be in the range of $0 \leq G\alpha < 1$. To have high sensitivity when the steering angle $\theta$h is small, G$\alpha$ may be set to be in the range of $1 < G\alpha$ although not illustrated. To avoid sensitivity change due to the steering angle $\theta$h, G$\alpha$ may be set to be one.

The torque signal Tref_d0 output from the rudder angle sensitive gain unit 255 is input to the restriction unit 256. The upper and lower limit values of the torque signal Tref_d0 are set to the restriction unit 256.

FIG. 32 is a diagram illustrating exemplary setting of the upper and lower limit values of the torque signal at the restriction unit. As illustrated in FIG. 32, the upper and lower limit values of the torque signal Tref_d0 are set to the restriction unit 256 in advance, and the restriction unit 256 outputs, as a torque signal Tref_d, the upper limit value when the torque signal Tref_d0 that is input is equal to or larger than the upper limit value, the lower limit value when the torque signal Tref_d0 that is input is equal to or smaller than the lower limit value, or the torque signal Tref_d0 otherwise.

Note that, the steering torque sensitive gain, the vehicle speed sensitive gain, and the rudder angle sensitive gain may have curved characteristics in place of linear characteristics as illustrated in FIGS. 29, 30, and 31. In addition, settings of the steering torque sensitive gain, the vehicle speed sensitive gain, and the rudder angle sensitive gain may be adjusted as appropriate in accordance with a steering feeling. In addition, the restriction unit 256 may be omitted, for example, when the magnitude of a torque signal is not likely to increase or is prevented by another means. The steering torque sensitive gain unit 253, the vehicle speed sensitive gain unit 254, and the rudder angle sensitive gain unit 255 may also be omitted as appropriate. In addition, installation positions of the steering torque sensitive gain, the vehicle speed sensitive gain, and the rudder angle sensitive gain may be interchanged. In addition, for example, the steering torque sensitive gain, the vehicle speed sensitive gain, and the rudder angle sensitive gain may be determined in parallel and used to multiply the SAT information $T_{ST}1$ at one component.

Thus, the configuration of the SAT information correction unit 250 in the present embodiment is exemplary and may be different from the configuration illustrated in FIG. 27.

In the present embodiment as well, effect same as those of the first embodiment can be obtained with a configuration in which the low-$\mu$ road torque correction value calculation unit 280 described above in the first embodiment is included in the target steering torque generation unit 201. Specifically, a configuration in which the self-aligning torque $T_{SAT}$ calculated at the SAT calculation unit 251 (refer to FIG. 27) is input to the low-$\mu$ road torque correction value calculation unit 280 illustrated in FIG. 11 may be employed.

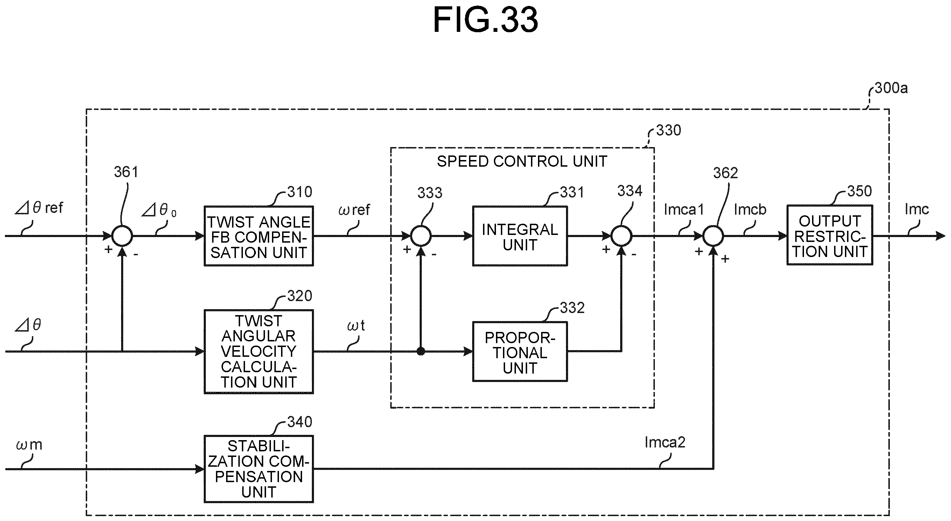

The twist angle control unit 300a of the second embodiment will be described below with reference to FIG. 33.

FIG. 33 is a block diagram illustrating an exemplary configuration of the twist angle control unit of the second embodiment. The twist angle control unit 300a calculates the motor current command value Imc based on the target twist angle $\Delta\theta$ref, the twist angle $\Delta\theta$, and the motor angular velocity $\omega$m. The twist angle control unit 300a includes the twist angle feedback (FB) compensation unit 310, a twist angular velocity calculation unit 320, the speed control unit 330, the stabilization compensation unit 340, the output restriction unit 350, the subtraction unit 361, and an addition unit 362.

The target twist angle $\Delta\theta$ref output from the conversion unit 500 is input to the subtraction unit 361 through addition. The twist angle $\Delta\theta$ is input to the subtraction unit 361 through subtraction and input to the twist angular velocity calculation unit 320. The motor angular velocity $\omega$m is input to the stabilization compensation unit 340.

The twist angle FB compensation unit 310 multiplies the deviation $\Delta\theta$0 between the target twist angle $\Delta\theta$ref and the twist angle $\Delta\theta$, which is calculated at the subtraction unit 361, by the compensation value CFB (transfer function) and outputs a target twist angular velocity $\omega$ref with which the twist angle $\Delta\theta$ follows the target twist angle $\Delta\theta$ref. The compensation value CFB may be a simple gain Kpp, or a typically used compensation value such as a PI control compensation value.

The target twist angular velocity $\omega$ref is input to the speed control unit 330. With the twist angle FB compensation unit 310 and the speed control unit 330, it is possible to cause the twist angle $\Delta\theta$ to follow the target twist angle $\Delta\theta$ref, thereby achieving desired steering torque.

The twist angular velocity calculation unit 320 calculates the twist angular velocity wt by performing differential arithmetic processing on the twist angle $\Delta\theta$. The twist angular velocity wt is output to the speed control unit 330. The twist angular velocity calculation unit 320 may perform, as differential calculation, pseudo differentiation with a HPF and a gain. Alternatively, the twist angular velocity calculation unit 320 may calculate the twist angular velocity wt by another means or not from the twist angle $\Delta\theta$ and may output the calculated twist angular velocity $\omega t$ to the speed control unit 330.

The speed control unit 330 calculates, by I-P control (proportional preceding PI control), a motor current command value Imca1 with which the twist angular velocity wt follows the target twist angular velocity $\omega$ref.

The subtraction unit 333 calculates the difference ($\omega$ref - $\omega$t) between the target twist angular velocity $\omega$ref and the twist angular velocity wt. The integral unit 331 integrates the difference ($\omega$ref - $\omega$t) between the target twist angular velocity $\omega$ref and the twist angular velocity wt, and inputs a result of the integration to the subtraction unit 334 through addition.

The twist angular velocity wt is also output to the proportional unit 332. The proportional unit 332 performs proportional processing with the gain Kvp on the twist angular velocity wt and inputs a result of the proportional processing to the subtraction unit 334 through subtraction. A result of the subtraction at the subtraction unit 334 is output as the motor current command value Imca1. Note that, the speed control unit 330 may calculate the motor current command value Imca1 not by I-P control but by typically used control method such as PI control, P (proportional) control, PID (proportional-integral-differential) control, PI-D control (differential preceding PID control), model matching control, or model reference control.

The stabilization compensation unit 340 has a compensation value Cs (transfer function) and calculates a motor current command value Imca2 from the motor angular velocity wm. When gains of the twist angle FB compensation unit 310 and the speed control unit 330 are increased to improve the following capability and the disturbance characteristic, a controlled oscillation phenomenon occurs in a higher range. To avoid this, the transfer function (Cs) necessary for stabilization of the motor angular velocity $\omega$m is set to the stabilization compensation unit 340. Accordingly, stabilization of the entire EPS control system can be achieved.

The addition unit 362 adds the motor current command value Imca1 from the speed control unit 330 and the motor current command value Imca2 from the stabilization compensation unit 340, and outputs a result of the addition as a motor current command value Imcb.

The upper and lower limit values of the motor current command value Imcb are set to the output restriction unit 350 in advance. The output restriction unit 350 outputs the motor current command value Imc with restriction on the upper and lower limit values of the motor current command value Imcb.

Note that, the configuration of the twist angle control unit 300a in the present embodiment is exemplary and may be different from the configuration illustrated in FIG. 33. For example, the twist angle control unit 300a may not include the stabilization compensation unit 340.

(Modification)

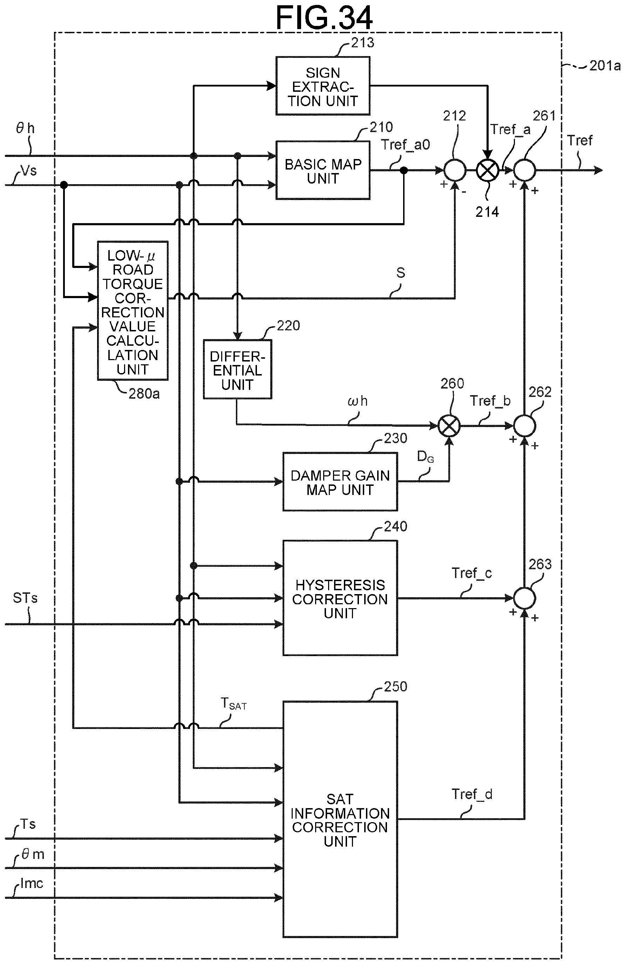

FIG. 34 is a block diagram illustrating an exemplary configuration of a target steering torque generation unit of a modification of the second embodiment. Note that, a component same as that in the configuration described above in the second embodiment is denoted by the same reference sign and duplicate description thereof is omitted.

As illustrated in FIG. 34, in the modification of the second embodiment as well, effects same as those of the first modification of the first embodiment can be obtained with a configuration in which the low-$\mu$ road torque correction value calculation unit 280a described above in the first modification of the first embodiment is included in a target steering torque generation unit 201a. Specifically, a configuration in which the self-aligning torque $T_{SAT}$ calculated at the SAT calculation unit 251 (refer to FIG. 27) is input to the low-$\mu$ road torque correction value calculation unit 280a illustrated in FIG. 17 may be employed.

Note that, the second embodiment and its modification described above exemplarily describe a configuration in which the self-aligning torque $T_{SAT}$ calculated at the SAT calculation unit 251 (refer to FIG. 27) is used as the physical quantity generated through tire slipping, but similarly to the second and third modifications of the first embodiment, a configuration in which the real yaw rate $\gamma$ detected by the yaw rate sensor 15 (refer to FIG. 1) is used as the physical quantity generated through tire slipping is also possible in the present embodiment. In addition, in the present embodiment as well, effects same as those of the first and second embodiments described above can be obtained, for example, with a configuration in which the real lateral acceleration detected by the lateral acceleration sensor 16 (refer to FIG. 1) is used as the physical quantity generated through tire slipping.

(Third embodiment)

Although the present disclosure is applied to a column-type EPS as one vehicle steering device in the first and second embodiments, the present disclosure is not limited to an upstream-type EPS such as a column-type EPS but is applicable to a downstream-type EPS such as a rack-pinion EPS. Moreover, since feedback control is performed based on a target twist angle, the present disclosure is also applicable to, for example, a steer-by-wire (SBW) reaction force device including at least a torsion bar (with an optional spring constant) and a twist angle detection sensor. The following describes an embodiment (third embodiment) when the present disclosure is applied to a SBW reaction force device including a torsion bar.

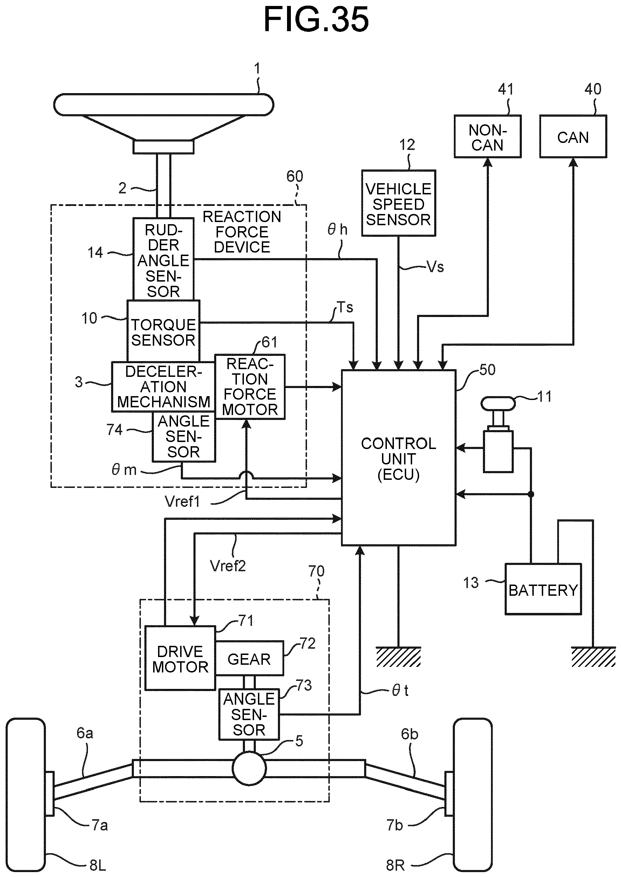

First, the entire SBW system including a SBW reaction force device will be described below. FIG. 35 is a diagram illustrating an exemplary configuration of the SBW system in a manner corresponding to the typical configuration of the electric power steering device illustrated in FIG. 1. Note that, a component same as that in the configuration described above in the first and second embodiments is denoted by the same reference sign and detailed description thereof is omitted.

The SBW system is a system that includes no intermediate shaft mechanically connected with the column shaft 2 at the universal joint 4a in FIG. 1 and conveys an operation of the wheel 1 to a rotation mechanism constituted by the steered wheels 8L and 8R and the like through an electric signal. As illustrated in FIG. 35, the SBW system includes a reaction force device 60 and a drive device 70, and a control unit (ECU) 50 controls the devices. The reaction force device 60 performs detection of the steering angle θh at the rudder angle sensor 14 and simultaneously transfers, to the driver as reaction force torque, a motion state of the vehicle conveyed from the steered wheels 8L and 8R. The reaction force torque is generated by a reaction force motor 61. Note that, although some SBW systems include no torsion bar in the reaction force device, a SBW system to which the present disclosure is applied includes a torsion bar, and the steering torque Ts is detected at the torque sensor 10. In addition, an angle sensor 74 detects the motor angle θm of the reaction force motor 61. The drive device 70 drives a drive motor 71 in accordance with steering of the wheel 1 by the driver and provides drive power thereof to the pinion rack mechanism 5 through a gear 72 to rotate the steered wheels 8L and 8R through the tie rods 6a and 6b. An angle sensor 73 is disposed near the pinion rack mechanism 5 and detects a turning angle θt of the steered wheels 8L and 8R. For cooperative control of the reaction force device 60 and the drive device 70, the ECU 50 generates a voltage control command value Vref1 with which the reaction force motor 61 is driven and controlled and a voltage control command value Vref2 with which the drive motor 71 is driven and controlled, based on, for example, the vehicle speed Vs from the vehicle speed sensor 12 in addition to information such as the steering angle θh and the turning angle θt output from the devices.

The following describes the configuration of the third embodiment in which the present disclosure is applied to such a SBW system.

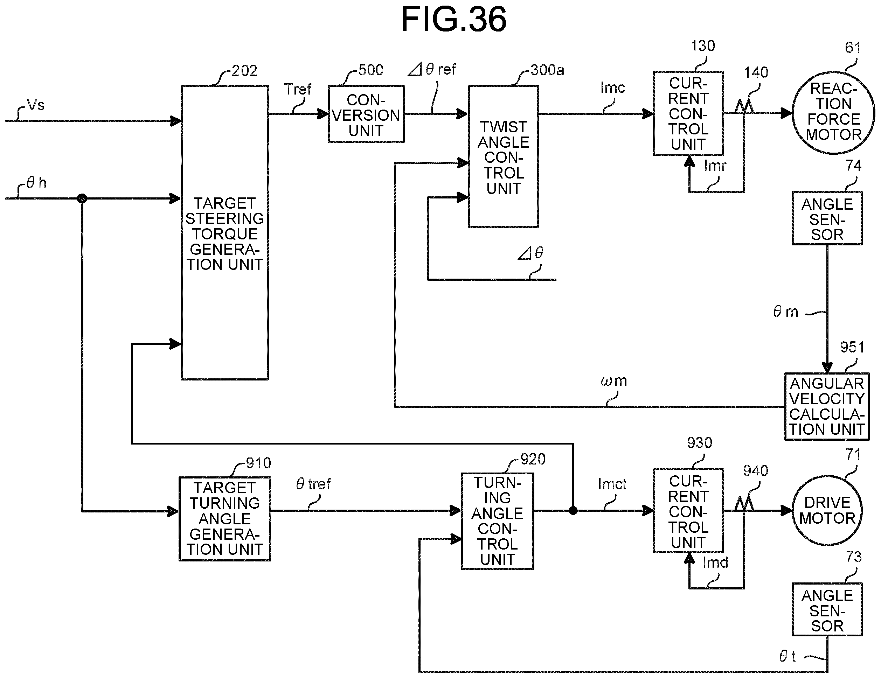

FIG. 36 is a block diagram illustrating the configuration of the third embodiment. In the third embodiment, control (hereinafter referred to as "twist angle control") on the twist angle Δθ and control (hereinafter referred to as "turning angle control") on the turning angle θt are performed to control the reaction force device by the twist angle control and to control the drive device by the turning angle control. Note that, the drive device may be controlled by another control method.

In the twist angle control, such control that the twist angle Δθ follows the target twist angle Δθref calculated through a target steering torque generation unit 202 and the conversion unit 500 by using the steering angle θh and the like is performed with configurations and operations same as those of the second embodiment. The motor angle θm is detected at the angle sensor 74, and the motor angular velocity ωm is calculated by differentiating the motor angle θm at an angular velocity calculation unit 951. The turning angle θt is detected at the angle sensor 73. In addition, although detailed description is not performed as processing in the EPS steering system/vehicle system 100 in the first embodiment, a current control unit 130 performs current control by driving the reaction force motor 61 based on the motor current command value Imc output from the twist angle control unit 300a and a current value Imr of the reaction force motor 61 detected at a motor current detector 140 with configurations and operations same as those of the subtraction unit 32B, the PI control unit 35, the PWM control unit 36, and the inverter circuit 37 illustrated in FIG. 3.

In the turning angle control, a target turning angle θtref is generated based on the steering angle θh at a target turning angle generation unit 910, the target turning angle θtref together with the turning angle θt is input to a turning angle control unit 920, and a motor current command value Imct with which the turning angle θt is equal to the target turning angle θtref is calculated at the turning angle control unit 920. Then, a current control unit 930 performs current control by driving the drive motor 71 based on the motor current command value Imct and a current value Imd of the drive motor 71 detected at a motor current detector 940 with configurations and operations same as those of the current control unit 130. Note that, in the present disclosure, the motor current command value Imct calculated at the turning angle control unit 920 is also output to the target steering torque generation unit 202.

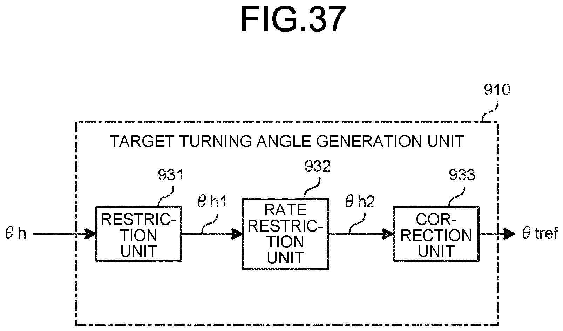

FIG. 37 is a diagram illustrating an exemplary configuration of the target turning angle generation unit. The target turning angle generation unit 910 includes a restriction unit 931, a rate restriction unit 932, and a correction unit 933.

The restriction unit 931 outputs a steering angle θh1 with restriction on the upper and lower limit values of the steering angle θh. Similarly to the output restriction unit 350 in the twist angle control unit 300a illustrated in FIG. 33, the upper and lower limit values of the steering angle θh are set in advance and restricted.

To avoid abrupt change of the steering angle, the rate restriction unit 932 provides restriction by setting a restriction value for the change amount of the steering angle θh1, and outputs the steering angle θh2. For example, the change amount is set to be the difference from the steering angle θh1 at the previous sample. When the absolute value of the change amount is larger than a predetermined value (restriction value), the steering angle θh1 is increased or decreased so that the absolute value of the change amount becomes equal to the restriction value, and the increased or decreased steering angle θh1 is outputs as the steering angle θh2. When the absolute value of the change amount is equal to or smaller than the restriction value, the steering angle θh1 is directly output as the steering angle θh2. Note that, restriction may be provided by setting the upper and lower limit values of the change amount instead of setting the restriction value for the absolute value of the change amount, or restriction may be provided on a change rate or a difference rate in place of the change amount.

The correction unit 933 corrects the steering angle θh2 and outputs the target turning angle θtref. For example, the target turning angle θtref is calculated from the steering angle θh2 by using a map that defines a characteristic of the target turning angle θtref for the magnitude |θh2| of the steering angle θh2. Alternatively, the target turning angle θtref may be calculated by simply multiplying the steering angle θh2 by a predetermined gain.

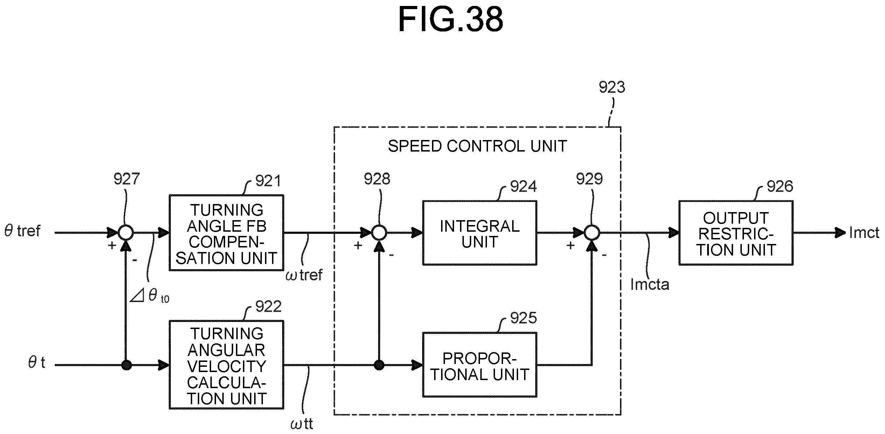

FIG. 38 is a diagram illustrating an exemplary configuration of the turning angle control unit. The configuration of the turning angle control unit 920 is same as the exemplary configuration of the twist angle control unit 300a illustrated in FIG. 33 from which the stabilization compensation unit 340 and the addition unit 362 are removed, the target turning angle θtref and the turning angle θt are input in place of the target twist angle Δθref and the twist angle Δθ, and the configurations and operations of a turning angle feedback (FB) compensation unit 921, a turning angular velocity calculation unit 922, a speed control unit 923, an output restriction unit 926, and a subtraction unit 927 are same as those of the twist angle FB compensation unit 310, the twist angular velocity calculation unit 320, the speed control unit 330, the output restriction unit 350, and the subtraction unit 361, respectively.

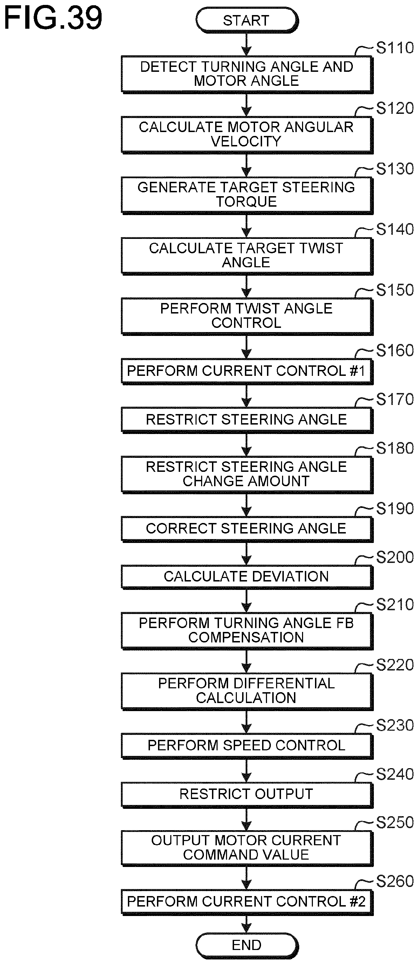

Exemplary operation of the third embodiment in such a configuration will be described below with reference to a flowchart in FIG. 39. FIG. 39 is a flowchart illustrating the exemplary operation of the third embodiment.

Once operation is started, the angle sensor 73 detects the turning angle θt and the angle sensor 74 detects the motor angle θm (step S110), and the turning angle θt and the motor angle θm are input to the turning angle control unit 920 and the angular velocity calculation unit 951, respectively.

The angular velocity calculation unit 951 calculates the motor angular velocity wm by differentiating the motor angle θm and outputs the calculated motor angular velocity ωm to the twist angle control unit 300a (step S120).

Thereafter, the target steering torque generation unit 202 executes operation same as that at steps S10 to S40 illustrated in FIG. 7 to perform current control by driving the reaction force motor 61 (steps S130 to S160).

Meanwhile, in the turning angle control, the target turning angle generation unit 910 receives the steering angle θh, and the steering angle θh is input to the restriction unit 931. The restriction unit 931 restricts the upper and lower limit values of the steering angle θh to upper and lower limit values set in advance (step S170) and outputs the steering angle θh as the steering angle θh1 to the rate restriction unit 932. The rate restriction unit 932 restricts the change amount of the steering angle θh1 based on a restriction value set in advance (step S180) and outputs the steering angle θh1 as the steering angle θh2 to the correction unit 933. The correction unit 933 obtains the target turning angle θtref by correcting the steering angle θh2 (step S190) and outputs the target turning angle θtref to the turning angle control unit 920.

Having received the turning angle θt and the target turning angle θtref, the turning angle control unit 920 calculates a deviation Δθt0 by subtracting the turning angle θt from the target turning angle θtref at the subtraction unit 927 (step S200). The deviation Δθt0 is input to the turning angle FB compensation unit 921, and the turning angle FB compensation unit 921 compensates the deviation Δθt0 by multiplying the deviation Δθt0 by a compensation value (step S210) and outputs a target turning angular velocity wtref to the speed control unit 923. The turning angular velocity calculation unit 922 receives the turning angle θt, calculates a turning angular velocity wtt through differential calculation on the turning angle θt (step S220) and outputs the turning angular velocity wtt to the speed control unit 923. Similarly to the speed control unit 330, the speed control unit 923 calculates a motor current command value Imcta by I-P control (step S230) and outputs the motor current command value Imcta to the output restriction unit 926. The output restriction unit 926 restricts the upper and lower limit values of the motor current command value Imcta to upper and lower limit values set in advance (step S240) and outputs the motor current command value Imcta as the motor current command value Imct (step S250).

The motor current command value Imct is input to the current control unit 930, and the current control unit 930 performs current control by driving the drive motor 71 based on the motor current command value Imct and the current value Imd of the drive motor 71 detected by the motor current detector 940 (step S260).

Note that, the order of data input, calculation, and the like in FIG. 39 may be changed as appropriate. Similarly to the speed control unit 330 in the twist angle control unit 300a, the speed control unit 923 in the turning angle control unit 920 may perform PI control, P control, PID control, PI-D control, or the like in place of I-P control and only needs to perform any of P control, I control, and D control, and following control at the turning angle control unit 920 and the twist angle control unit 300a may be performed in a typically used control structure. The turning angle control unit 920 is not limited to a control configuration used for a vehicle device but may have any control configuration with which a real angle (in this example, the turning angle θt) follows a target angle (in this example, the target turning angle θtref), and for example, may have a control configuration used for an industrial positioning device, an industrial robot, or the like.

In the third embodiment, one ECU 50 controls the reaction force device 60 and the drive device 70 as illustrated in FIG. 35, but an ECU for the reaction force device 60 and an ECU for the drive device 70 may be provided. In this case, the ECUs perform data transmission and reception through communication. In addition, although the SBW system illustrated in FIG. 35 has no mechanical connection between the reaction force device 60 and the drive device 70, the present disclosure is also applicable to a SBW system including a mechanical torque transmission mechanism configured to mechanically connect the column shaft 2 and the rotation mechanism through a clutch or the like when anomaly has occurred to the system. In such a SBW system, when the system is normal, the clutch is turned off to set mechanical torque transfer to an open state, or when the system is anomalous, the clutch is turned on to set mechanical torque transfer to an enabled state.

The twist angle control units 300 and 300a in the above-described first to third embodiments directly calculate the motor current command value Imc and an assist current command value Iac, but before calculating the motor current command value and the assist current command value, may first calculate motor torque (target torque) to be output. In this case, a typically used relation between motor current and motor torque is used to calculate the motor current command value and the assist current command value from the motor torque.

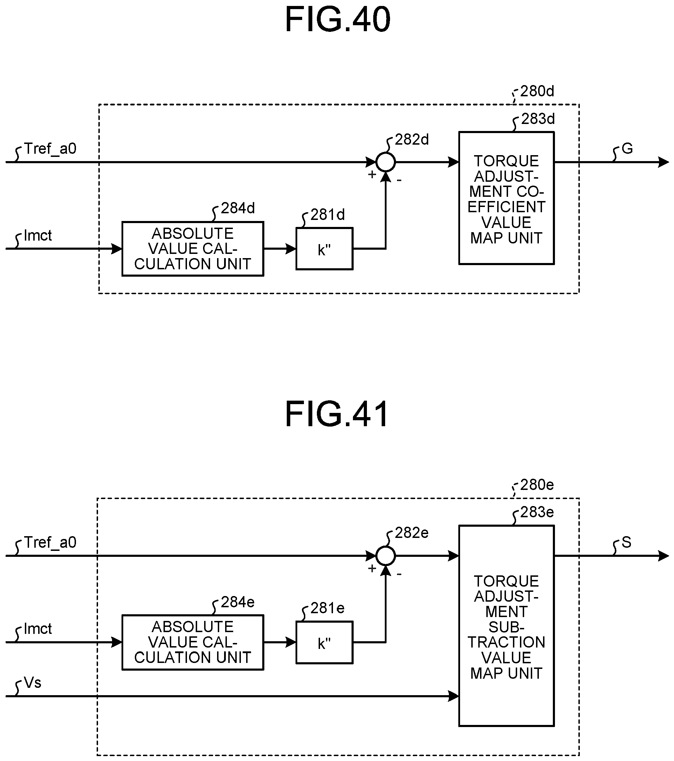

FIG. 40 is a block diagram illustrating an exemplary configuration of a low-μ road torque correction value calculation unit of a third embodiment. The first and second embodiments describe above an example in which the self-aligning torque $T_{SAT}$ estimated by the SAT estimation unit 343 (refer to FIG. 3), the real yaw rate $\gamma$ detected by the yaw rate sensor 15 (refer to FIG. 1), or the real lateral acceleration detected by the lateral acceleration sensor 16 (refer to FIG. 1) is used as the physical quantity generated through tire slipping, but the present embodiment describes a configuration in which the motor current command value Imct calculated at the turning angle control unit 920 (refer to FIG. 36) is used as the physical quantity generated through tire slipping as illustrated in FIG. 40.

As illustrated in FIG. 40, a low-μ road torque correction value calculation unit 280d of the third embodiment includes a proportionality coefficient multiplication unit 281d, a subtraction unit 282d, a torque adjustment coefficient value map unit 283d, and an absolute value calculation unit 284d.

The motor current command value Imct is input to the absolute value calculation unit 284d. The absolute value calculation unit 284d calculates the absolute value |Imct| of the input motor current command value Imct. The proportionality coefficient multiplication unit 281d outputs, to the subtraction unit 282d, a value k"(|Imct|) obtained by multiplying the absolute value |Imct| of the input motor current command value by the predetermined proportionality coefficient k". The value of the proportionality coefficient k" is set to be a value with which the torque signal Tref_a0 and the output value k"(|Imct|) of the proportionality coefficient multiplication unit 281d are substantially equal to each other in the normal traveling state.

The subtraction unit 282d outputs, to the torque adjustment coefficient value map unit 283d, a value Tref_a0 - k"(|Imct|) obtained by subtracting the output value k"(|Imct|) of the proportionality coefficient multiplication unit 281d from the torque signal Tref_a0.

The torque adjustment coefficient value map unit 283d holds a torque adjustment coefficient value map representing the relation between the output value Tref_a0 - k"(|Imct|) of the subtraction unit 282d and the torque adjustment coefficient value G. Characteristics of the torque adjustment coefficient value map according to the third embodiment are same as those of the torque adjustment coefficient value map held by the torque adjustment coefficient value map unit 283 of the first embodiment illustrated in FIG. 14, and description thereof can be given by replacing the output value Tref_a0 - k($|T_{SAT}|$) of the subtraction unit 282 in its description with the output value Tref_a0 - k"(|Imct|) of the subtraction unit 282d.

The torque adjustment coefficient value map unit 283d derives the torque adjustment coefficient value G in accordance with the output value Tref_a0 - k"(|Imct|) of the subtraction unit 282d by using the above-described torque adjustment coefficient value map, and outputs the torque adjustment coefficient value G. Note that, the torque adjustment coefficient value G may be calculated by using an expression representing the relation between the output value Tref_a0 - k"(|Imct|) of the subtraction unit 282d and the torque adjustment coefficient value G.

With the configuration of the third embodiment illustrated in FIG. 40, as well, similarly to the above-described configurations according to the first and second embodiments, the torque signal Tref_a in a state in which the grip force of the tire is lost (the dashed line in FIG. 15) can be made smaller than that in the normal traveling state (the solid line in FIG. 15). Accordingly, the steering feeling becomes lighter than in the normal traveling state, and the driver can recognize loss of the grip force of the tire and perform an appropriate emergency avoidance operation.

(Modification)

FIG. 41 is a block diagram illustrating an exemplary configuration of a low-μ road torque correction value calculation unit of a modification of the third embodiment. Note that, a component same as that in the configuration described above in the third embodiment is denoted by the same reference sign and duplicate description thereof is omitted.

As illustrated in FIG. 41, the vehicle speed Vs in addition to the torque signal Tref_a0 output from the basic map unit 210 and the motor current command value Imct calculated at the turning angle control unit 920 (refer to FIG. 39) is input to a low-μ road torque correction value calculation unit 280e.

As illustrated in FIG. 41, the low-$\mu$ road torque correction value calculation unit 280e of the modification of the third embodiment includes a proportionality coefficient multiplication unit 281e, a subtraction unit 282e, a torque adjustment subtraction value map unit 283e, and an absolute value calculation unit 284e.

The motor current command value Imct is input to the absolute value calculation unit 284e. The absolute value calculation unit 284e calculates the absolute value |Imct| of the input motor current command value Imct. The proportionality coefficient multiplication unit 281e outputs, to the subtraction unit 282e, the value k"(|Imctl) obtained by multiplying the absolute value |Imct| of the input motor current command value by the predetermined proportionality coefficient k". The value of the proportionality coefficient k" is set to be a value with which the torque signal Tref_a0 and the output value k"(|Imct|) of the proportionality coefficient multiplication unit 281e are substantially equal to each other in the normal traveling state.

The subtraction unit 282e outputs, to the torque adjustment subtraction value map unit 283e, the value Tref_a0 - k"(|Imct|) obtained by subtracting the output value k"(|Imct|) of the proportionality coefficient multiplication unit 281e from the torque signal Tref_a0.

The torque adjustment subtraction value map unit 283e holds a torque adjustment subtraction value map representing the relation among the output value Tref_a0 - k"(|Imct|) of the subtraction unit 282e, the torque adjustment subtraction value S, and the vehicle speed Vs. Characteristics of the torque adjustment subtraction value map according to the modification of the third embodiment are same as those of the torque adjustment subtraction value map held by the torque adjustment subtraction value map unit 283a of the first modification of the first embodiment illustrated in FIG. 24, and description thereof can be given by replacing the output value Tref_a0 - k(|T$_{SAT}$|) of the subtraction unit 282a in its description with the output value Tref_a0 - k"(|Imct|) of the subtraction unit 282e.

The torque adjustment subtraction value map unit 283e derives the torque adjustment subtraction value S in accordance with the output value Tref_a0 - k"(|Imct|) of the subtraction unit 282e by using the above-described torque adjustment subtraction value map, and outputs the torque adjustment subtraction value S. Note that, the torque adjustment subtraction value S may be calculated by using an expression representing the relation among the output value Tref_a0 - k"(|Imct|) of the subtraction unit 282e, the torque adjustment subtraction value S, and the vehicle speed Vs.

With the configuration of the modification of the third embodiment illustrated in FIG. 41, as well, similarly to the above-described configuration according to the first embodiment, the torque signal Tref_a in a state in which the grip force of the tire is lost (the dashed line in FIG. 15) can be made smaller than that in the normal traveling state (the solid line in FIG. 15). Accordingly, the steering feeling becomes lighter than in the normal traveling state, and the driver can recognize loss of the grip force of the tire and perform an appropriate emergency avoidance operation.

Note that, the third embodiment and its modification described above exemplarily describe a configuration in which the motor current command value Imct calculated at the turning angle control unit 920 (refer to FIG. 39) is used as the physical quantity generated through tire slipping, but similarly to the second and third modifications of the first embodiment, a configuration in which the real yaw rate $\gamma$ detected by the yaw rate sensor 15 (refer to FIG. 1) is used as the physical quantity generated through tire slipping is also possible in the present embodiment. In addition, in the present embodiment as well, effects same as those of the first and second embodiments described above can be obtained, for example, with a configuration in which the real lateral acceleration detected by the lateral acceleration sensor 16 (refer to FIG. 1) is used as the physical quantity generated through tire slipping.

In addition, a configuration in which the motor current command value Iref generated at the twist angle control unit 300 (refer to FIG. 5) is used as the physical quantity generated through tire slipping may be employed in the first embodiment described above, or a configuration in which the motor current command value Imc calculated by the twist angle control unit 300a (refer to FIG. 25) is used as the physical quantity generated through tire slipping may be employed in the second embodiment described above.

The present disclosure is not limited to a torsion bar but may have a mechanism having an optional spring constant between the wheel and the motor or the reaction force motor.

Reference Signs List

1 wheel
2 column shaft
2A torsion bar
3 deceleration mechanism
4a, 4b universal joint
5 pinion rack mechanism
6a, 6b tie rod
7a, 7b hub unit

8L, 8R steered wheel
10 torque sensor
11 ignition key
12 vehicle speed sensor
13 battery
14 rudder angle sensor
15 yaw rate sensor
16 lateral acceleration sensor
20 motor
30, 50 control unit (ECU)
60 reaction force device
61 reaction force motor
70 drive device
71 drive motor
72 gear
73 angle sensor
100 EPS steering system/vehicle system
130 current control unit
140 motor current detector
200, 200a, 200b, 200c, 201, 201a, 202 target steering torque generation unit
210 basic map unit
211 multiplication unit
212 subtraction unit
213 sign extraction unit
214 multiplication unit
220 differential unit
230 damper gain map unit
240 hysteresis correction unit
250 SAT information correction unit
251 SAT calculation unit
251A conversion unit
251B angular velocity calculation unit
251C angular acceleration calculation unit
251D, 251E, 251F block
251H, 251I, 251J adder
252 filter unit
253 steering torque sensitive gain unit
254 vehicle speed sensitive gain unit
255 rudder angle sensitive gain unit
256 restriction unit
260 multiplication unit
261, 262, 263 addition unit
280, 280a, 280b, 280c, 280d, 280e low-$\mu$ road torque correction value calculation unit
281, 281a, 281b, 281c, 281d, 281e proportionality coefficient multiplication unit
282, 282a, 282b, 282c, 282d, 282e subtraction unit
283, 283b, 283d torque adjustment coefficient value map unit
283a, 283c, 283e torque adjustment subtraction value map unit
284, 284a, 284b, 284c, 284d, 284e absolute value calculation unit
300, 300a twist angle control unit
310 twist angle feedback (FB) compensation unit
320 twist angular velocity calculation unit
330 speed control unit
331 integral unit
332 proportional unit
333, 334 subtraction unit
340 stabilization compensation unit
350 output restriction unit
360 rudder angle disturbance compensation unit

361 subtraction unit
362, 363 addition unit
370 speed reduction ratio unit
400 steering direction determination unit
500 conversion unit
910 target turning angle generation unit
920 turning angle control unit
921 turning angle feedback (FB) compensation unit
922 turning angular velocity calculation unit
923 speed control unit
926 output restriction unit
927 subtraction unit
930 current control unit
931 restriction unit
933 correction unit
932 rate restriction unit
940 motor current detector
1001 CPU
1005 interface
1006 A/D converter
1007 PWM controller
1100 control computer (MCU)

**Claims**

1. A vehicle steering device configured to assist and control a steering system of a vehicle by driving and controlling a motor configured to assist steering force, the vehicle steering device comprising a target steering torque generation unit (200, 201, 202) configured to generate target steering torque of the motor (20), wherein

   the target steering torque generation unit (200, 201, 202) generates target steering torque in accordance with the difference value of a torque signal in accordance with a steering angle and a vehicle speed from a value obtained by multiplying a physical quantity generated through tire slipping by a predetermined proportionality coefficient,
   **characterized in that**
   the target steering torque is converted into a target twist angle and **in that** a twist angle control unit (300) generates a motor current control value as a control value of current supplied to the motor (20) based on the target twist angle.

2. The vehicle steering device according to claim 1, wherein the target steering torque generation unit (200, 201, 202) generates the target steering torque by multiplying the torque signal by a torque adjustment coefficient value in accordance with the difference value.

3. The vehicle steering device according to claim 2, wherein the target steering torque generation unit (200) reduces the torque adjustment coefficient value as the difference value is larger.

4. The vehicle steering device according to claim 2 or 3, wherein the torque adjustment coefficient value is a positive value equal to or smaller than one.

5. The vehicle steering device according to claim 1, wherein the target steering torque generation unit (200) generates the target steering torque by subtracting, from the torque signal, a torque adjustment subtraction value in accordance with the difference value.

6. The vehicle steering device according to claim 5, wherein the target steering torque generation unit (200) increases the torque adjustment subtraction value as the difference value is larger.

7. The vehicle steering device according to claim 5 or 6, wherein the torque adjustment subtraction value is smaller than the torque signal.

8. The vehicle steering device according to any one of claims 1 to 7, wherein the physical quantity is self-aligning torque.

9. The vehicle steering device according to any one of claims 1 to 7, wherein the physical quantity is a yaw rate.

10. The vehicle steering device according to any one of claims 1 to 7, wherein the physical quantity is a current command value of the motor (20).


**Patentansprüche**

1. Fahrzeuglenkvorrichtung, die so konfiguriert ist, dass sie ein Lenksystem eines Fahrzeugs unterstützt und steuert, indem sie einen Motor antreibt und steuert, der so konfiguriert ist, dass er eine Lenkkraft unterstützt, wobei die Fahrzeuglenkvorrichtung eine Soll-Lenkmoment-Erzeugungseinheit (200, 201, 202) umfasst, die so konfiguriert ist, dass sie ein Soll-Lenkmoment des Motors (20) erzeugt, wobei

   die Soll-Lenkmoment-Erzeugungseinheit (200, 201, 202) ein Soll-Lenkmoment entsprechend dem Differenzwert eines Drehmomentsignals entsprechend einem Lenkwinkel und einer Fahrzeuggeschwindigkeit aus einem Wert erzeugt, der durch Multiplikation einer durch Reifenschlupf erzeugten physikalischen Größe mit einem vorgegebenen Proportionalitätskoeffizienten erhalten wird,
   **dadurch gekennzeichnet, dass**
   das Soll-Lenkmoment in einen Soll-Verdrehungswinkel umgewandelt wird und dass eine Verdrehungswinkel-Steuereinheit (300) einen Motorstrom-Steuerwert als Steuerwert des dem Motor (20) zugeführten Stroms basierend auf dem Ziel-Verdrehungswinkel erzeugt.

2. Fahrzeuglenkvorrichtung nach Anspruch 1, wobei die Soll-Lenkmoment-Erzeugungseinheit (200, 201, 202) das Soll-Lenkmoment durch Multiplizieren des Drehmomentsignals mit einem Drehmoment-Anpassungskoeffizientenwert gemäß dem Differenzwert erzeugt.

3. Fahrzeuglenkvorrichtung nach Anspruch 2, wobei die Soll-Lenkdrehmoment-Erzeugungseinheit (200) den Wert des Drehmoment-Anpassungskoeffizienten verringert, wenn der Differenzwert größer ist.

4. Fahrzeuglenkvorrichtung nach Anspruch 2 oder 3, wobei der Wert des Drehmoment-Anpassungskoeffizienten ein positiver Wert gleich oder kleiner als eins ist.

5. Fahrzeuglenkvorrichtung nach Anspruch 1, wobei die Soll-Lenkdrehmoment-Erzeugungseinheit (200) das Soll-Lenkdrehmoment erzeugt, indem sie von dem Drehmomentsignal einen Drehmomentanpassungs-Subtraktionswert gemäß dem Differenzwert subtrahiert.

6. Fahrzeuglenkvorrichtung nach Anspruch 5, wobei die Soll-Lenkdrehmoment-Erzeugungseinheit (200) den Drehmomentanpassungs-Subtraktionswert erhöht, wenn der Differenzwert größer ist.

7. Fahrzeuglenkvorrichtung nach Anspruch 5 oder 6, wobei der Drehmomenteinstellungs-Subtraktionswert kleiner als das Drehmomentsignal ist.

8. Fahrzeuglenkvorrichtung nach einem der Ansprüche 1 bis 7, wobei die physikalische Größe ein selbstausrichtendes Drehmoment ist.

9. Fahrzeuglenkvorrichtung nach einem der Ansprüche 1 bis 7, wobei die physikalische Größe eine Gierrate ist.

10. Fahrzeuglenkvorrichtung nach einem der Ansprüche 1 bis 7, wobei die physikalische Größe ein Stromsollwert des Motors (20) ist.


**Revendications**

1. Dispositif de direction de véhicule configuré pour assister et commander un système de direction d'un véhicule par entraînement et commande d'un moteur configuré pour assister une force de direction, le dispositif de direction de véhicule comprenant une unité de génération de couple de direction cible (200, 201, 202) configurée pour générer un couple de direction cible du moteur (20), dans lequel

l'unité de génération de couple de direction cible (200, 201, 202) génère un couple de direction cible conformément à la valeur de différence d'un signal de couple conformément à un angle de braquage et une vitesse de véhicule par rapport à une valeur obtenue par multiplication d'une quantité physique générée par le biais d'un dérapage de pneu par un coefficient de proportionnalité prédéterminé,
**caractérisé en ce que**
le couple de direction cible est converti en un angle de vrillage cible et **en ce qu'**une unité de commande d'angle de vrillage (300) génère une valeur de commande de courant de moteur en tant que valeur de commande d'un courant fourni au moteur (20) sur la base de l'angle de vrillage cible.

2. Dispositif de direction de véhicule selon la revendication 1, dans lequel l'unité de génération de couple de direction cible (200, 201, 202) génère le couple de direction cible par multiplication du signal de couple par une valeur de coefficient d'ajustement de couple conformément à la valeur de différence.

3. Dispositif de direction de véhicule selon la revendication 2, dans lequel l'unité de génération de couple de direction cible (200) réduit la valeur de coefficient d'ajustement de couple lorsque la valeur de différence est plus grande.

4. Dispositif de direction de véhicule selon la revendication 2 ou 3, dans lequel la valeur de coefficient d'ajustement de couple est une valeur positive égale ou inférieure à un.

5. Dispositif de direction de véhicule selon la revendication 1, dans lequel l'unité de génération de couple de direction cible (200) génère le couple de direction cible par soustraction, du signal de couple, d'une valeur de soustraction d'ajustement de couple conformément à la valeur de différence.

6. Dispositif de direction de véhicule selon la revendication 5, dans lequel l'unité de génération de couple de direction cible (200) augmente la valeur de soustraction d'ajustement de couple lorsque la valeur de différence est plus grande.

7. Dispositif de direction de véhicule selon la revendication 5 ou 6, dans lequel la valeur de soustraction d'ajustement de couple est inférieure au signal de couple.

8. Dispositif de direction de véhicule selon l'une quelconque des revendications 1 à 7, dans lequel la quantité physique est un couple d'auto-alignement.

9. Dispositif de direction de véhicule selon l'une quelconque des revendications 1 à 7, dans lequel la quantité physique est une vitesse angulaire en lacet.

10. Dispositif de direction de véhicule selon l'une quelconque des revendications 1 à 7, dans lequel la quantité physique est une valeur d'ordre de courant du moteur (20).

# FIG.1

# FIG.2

# FIG.3

# FIG.4

Ts

1

2

RUDDER ANGLE
SENSOR $\theta h$

UPPER ANGLE
SENSOR $\theta 1$

2A

LOWER ANGLE
SENSOR $\theta 2$

20

DETECTED
CURRENT
VALUE Im

8L

8R

ROAD SURFACE REACTION
FORCE Rr, ROAD SURFACE
INFORMATION $\mu$

# FIG.5

# FIG.6

MOTOR ANGULAR VELOCITY $\omega$m

RIGHT
STEERING
(LEFT
BACKWARD
STEERING)

RIGHT
STEERING
(RIGHT
FORWARD
STEERING)

STEERING
ANGLE $\theta$h

0

LEFT
STEERING
(LEFT
FORWARD
STEERING)

LEFT
STEERING
(RIGHT
BACKWARD
STEERING)

# FIG.7

```
        ┌─────────────┐
        │    START    │
        └─────────────┘
               │
               ▼
┌───────────────────────────────┐  ～S10
│  GENERATE TARGET STEERING     │
│       TORQUE Tref             │
└───────────────────────────────┘
               │
               ▼
┌───────────────────────────────┐  ～S20
│    CONVERT TARGET STEERING    │
│  TORQUE Tref INTO TWIST ANGLE │
│           △θ ref              │
└───────────────────────────────┘
               │
               ▼
┌───────────────────────────────┐  ～S30
│   CALCULATE MOTOR CURRENT     │
│     COMMAND VALUE Iref        │
└───────────────────────────────┘
               │
               ▼
┌───────────────────────────────┐  ～S40
│    PERFORM CURRENT CONTROL    │
└───────────────────────────────┘
               │
               ▼
        ┌─────────────┐
        │     END     │
        └─────────────┘
```

# FIG.8

EP 3 929 068 B1

# FIG.9

TORQUE SIGNAL
Tref_a0

HIGH VEHICLE
SPEED

MIDDLE VEHICLE
SPEED

LOW VEHICLE
SPEED

0          STEERING ANGLE | $\theta$ h |

# FIG.10

DAMPER GAIN
DG

0          VEHICLE SPEED Vs

# FIG.11

TORQUE SIGNAL
Tref_c

# FIG.12

# FIG.13

SAT VALUE

$\mu$ =1.0

$\mu$ =0.1
STEERING
ANGLE | $\theta$ h |

$\theta$ a    $\theta$ b

# FIG.14

TORQUE
ADJUSTMENT
COEFFICIENT
VALUE G

1.0

0.1

0

A                    B

Tref_a0-k($|T_{SAT}|$)

# FIG.15

# FIG.16

FIG.17

# FIG.18

# FIG.19

FIG.20

EP 3 929 068 B1

FIG.21

EP 3 929 068 B1

# FIG.22

Tref_a0

280b

283b

282b

G

TORQUE
ADJUST-
MENT CO-
EFFICIENT
VALUE
MAP UNIT

+ -

284b

281b

γ

ABSOLUTE
VALUE CAL-
CULATION UNIT

k'

# FIG.23

Tref

Tref_a  261

214

212

Tref_a0

213

SIGN EXTRAC-TION UNIT

210

BASIC MAP UNIT

S

220

DIFFER-ENTIAL UNIT

262

Tref_b  260

$D_G$

230

$\omega h$

DAMPER GAIN MAP UNIT

Tref_c

240

HYSTERESIS CORRECTION UNIT

200c

280c

LOW-$\mu$ ROAD TORQUE CORREC-TION VALUE CALCULA-TION UNIT

$\theta h$

Vs

$\gamma$

$ST_S$

# FIG.24

# FIG.25

EP 3 929 068 B1

# FIG.26

# FIG.27

EP 3 929 068 B1

# FIG.28

# FIG.29

# FIG.30

# FIG.31

RUDDER ANGLE
SENSITIVE GAIN

1.0

0          θ h1          θ h2    STEERING
                                ANGLE[deg]

# FIG.32

TORQUE SIGNAL Tref_d

UPPER
LIMIT
VALUE

0          TORQUE SIGNAL
           Tref_d0

LOWER LIMIT
VALUE

# FIG.33

EP 3 929 068 B1

# FIG.34

# FIG.35

# FIG.36

EP 3 929 068 B1

# FIG.37

910

TARGET TURNING ANGLE GENERATION UNIT

931 932 933

$\theta$ h → | RESTRIC-TION UNIT | → $\theta$ h1 → | RATE RESTRIC-TION UNIT | → $\theta$ h2 → | COR-RECTION UNIT | → $\theta$ tref

# FIG.38

EP 3 929 068 B1

# FIG.39

```
                    START

                    ↓                        S110
        DETECT TURNING ANGLE AND
             MOTOR ANGLE

                    ↓                        S120
        CALCULATE MOTOR ANGULAR
               VELOCITY

                    ↓                        S130
        GENERATE TARGET STEERING
                TORQUE

                    ↓                        S140
          CALCULATE TARGET TWIST
                 ANGLE

                    ↓                        S150
           PERFORM TWIST ANGLE
                CONTROL

                    ↓                        S160
        PERFORM CURRENT CONTROL #1

                    ↓                        S170
          RESTRICT STEERING ANGLE

                    ↓                        S180
          RESTRICT STEERING ANGLE
               CHANGE AMOUNT

                    ↓                        S190
          CORRECT STEERING ANGLE

                    ↓                        S200
            CALCULATE DEVIATION

                    ↓                        S210
        PERFORM TURNING ANGLE FB
               COMPENSATION

                    ↓                        S220
           PERFORM DIFFERENTIAL
                CALCULATION

                    ↓                        S230
          PERFORM SPEED CONTROL

                    ↓                        S240
              RESTRICT OUTPUT

                    ↓                        S250
          OUTPUT MOTOR CURRENT
              COMMAND VALUE

                    ↓                        S260
        PERFORM CURRENT CONTROL #2

                    ↓

                    END
```

# FIG.40

# FIG.41

**EP 3 929 068 B1**

**REFERENCES CITED IN THE DESCRIPTION**

**Patent documents cited in the description**

- EP 1800992 A1
- JP 2006315634 A